# EUROPEAN PATENT APPLICATION

(11) **EP 4 718 213 A1**
(43) Date of publication of application: **01.04.2026**
(21) Application number: 24826113.3
(22) Date of filing: 30.04.2024
(51) Int. Cl.: G06F 3/01, G06F 3/04842, G06F 3/00, G06V 40/18

(54) **ELECTRONIC DEVICE AND METHOD FOR DISPLAYING EXECUTABLE OBJECTS ON BASIS OF INPUT IN 3D SPACE, AND NON-TRANSITORY COMPUTER-READABLE STORAGE MEDIUM**

(30) Priority: 19.06.2023 KR 20230078474; 07.08.2023 KR 20230103181
(71) Applicant: Samsung Electronics Co., Ltd., Suwon-si, Gyeonggi-do 16677 (KR)
(72) Inventor: LEE, Jaeik, Suwon-si Gyeonggi-do 16677 (KR); LEE, Joayoung, Suwon-si Gyeonggi-do 16677 (KR)
(74) Representative: Appleyard Lees IP LLP
(86) International application number: PCT/KR2024/005865
(87) International publication number: WO 2024/262791

(57) **Abstract**

An electronic device is provided. The electronic device may comprise a display capable of providing a stereoscopic image to a user. The electronic device may comprise a processor. The processor may be configured to display an object on the display. The processor may be configured to receive a first input for moving the object. The processor may be configured to display, on the display, as a stereoscopic image, an executable object for an executable function related to the object, in response to the object moving along a perpendicular direction perpendicular to one surface of the display by means of the first input. The processor may be configured to execute the function in response to a second input for linking the object to the executable object.

## Description

### [Technical Field]

The following descriptions relate to an electronic device, a method, and a non-transitory computer-readable storage medium for displaying executable objects based on input on a three dimensional (3D) space.

### [Background Art]

A three dimensional (3D) display may display a spatial image that provides a sense of visual depth to a user. The 3D display may be classified into a glasses-type display and a glasses-free display. For example, the glasses-type display may be classified into an anaglyph glasses-type display, a polarization glasses-type display, and a shutter glasses-type display. For example, the glasses-free display may be classified into a light field display, a hologram display, and a volumetric display.

### [Disclosure]

### [Technical Solution]

An electronic device is provided. The electronic device may comprise a display capable of providing a stereoscopic image to a user. The electronic device may comprise a processor. The processor may be configured to display, on the display, an object. The processor may be configured to receive first input to move the object. The processor may be configured to, in response to that the object moves along a vertical direction perpendicular to a side of the display by the first input, display, on the display, an executable object for a function executable associated with the object as the stereoscopic image. The processor may be configured to execute the function in response to second input to link the object to the executable object.

A method is provided. The method may be executed in an electronic device including a display and a processor. The method may comprise displaying, on the display, an object. The method may comprise displaying, on the display, an object. The method may comprise receiving first input to move the object. The method may comprise, in response to that the object moves along a vertical direction perpendicular to a side of the display by the first input, displaying, on the display, an executable object for a function executable associated with the object as the stereoscopic image. The method may comprise executing the function in response to second input to link the object to the executable object.

A non-transitory computer-readable storage medium is provided. The non-transitory computer-readable storage medium may store one or more programs. The one or more programs may include instructions that, when executed by a processor of an electronic device including a display, cause the electronic device to display, on the display, an object. The one or more programs may include instructions that, when executed by the processor of the electronic device including the display, cause the electronic device to receive first input to move the object. The one or more programs may include instructions that, when executed by the processor of the electronic device including the display, cause the electronic device to, in response to that the object moves along a vertical direction perpendicular to a side of the display by the first input, display, on the display, an executable object for a function executable associated with the object as the stereoscopic image. The one or more programs may include instructions that, when executed by the processor of the electronic device including the display, cause the electronic device to execute the function in response to second input to link the object to the executable object.

### [Description of the Drawings]

FIG. 1 illustrates an exemplary situation in which a user views an electronic device including a display.
FIG. 2A illustrates an example of a structure of a display for providing a 2D image and a 3D image to a user.
FIG. 2B illustrates another example of a structure of a display for providing a 2D image and a 3D image to a user.
FIG. 3 is a simplified block diagram of an exemplary electronic device.
FIG. 4A illustrates an example of user input for an object.
FIG. 4B illustrates an example of display of an executable object according to user input for an object.
FIG. 4C illustrates an example of user input for an executable object.
FIG. 5A illustrates an example of display of an executable object according to a position of an object.
FIG. 5B illustrates an example of display of an executable object according to a position of an object.
FIG. 5C illustrates an example of regions in which executable objects are set.
FIG. 6A illustrates an example of user input for an object.
FIG. 6B illustrates an example of movement of an object according to user input for the object.
FIG. 6C illustrates an example of display of an executable object according to user input for an object.
FIG. 7A illustrates an example of an execution result of a function associated with an executable object.
FIG. 7B illustrates an example of an execution result of a function associated with an executable object.
FIG. 8A illustrates an example of display of an executable object according to user input for an object.
FIG. 8B illustrates an example of an execution result of a function associated with an executable object.
FIG. 8C illustrates an example of an execution result of a function associated with an executable object.
FIG. 8D illustrates an example of an execution result of a function associated with an executable object.
FIG. 8E illustrates an example of an execution result of a function associated with an executable object.
FIG. 9A illustrates an example of user input for an object.
FIG. 9B illustrates an example of display of an executable object according to user input for an object.
FIG. 9C illustrates an example of an execution result of a function associated with an executable object.
FIG. 10 illustrates an example of a storage region displayed according to movement of a screen.
FIG. 11A illustrates an example of a storage region displayed according to movement of a screen.
FIG. 11B illustrates an example of a storage region displayed according to movement of a screen.
FIG. 12 illustrates an example of a graphic effect applicable according to user input for an object.
FIG. 13A illustrates an example of a graphic effect applicable to an object.
FIG. 13B illustrates an example of a graphic effect applied to an object.
FIG. 14 is a flowchart of an exemplary method.
FIG. 15 is a block diagram of an electronic device in a network environment according to various embodiments.

### [Mode for Invention]

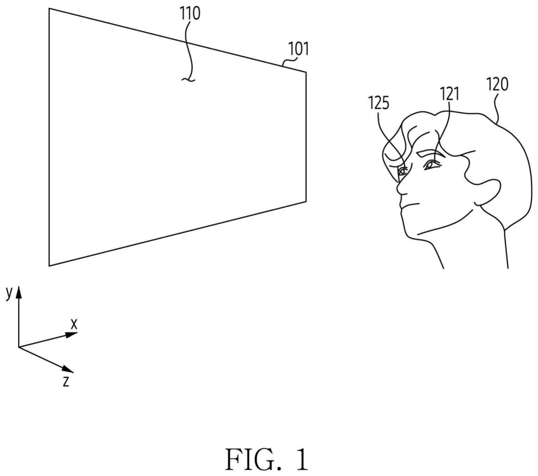

FIG. 1 illustrates an exemplary situation in which a user views an electronic device including a display.

Referring to FIG. 1, an electronic device 101 may provide visual content to a user 120 through a display 110.

The display 110 may provide the same image to eyes 121 and 125 of the user 120, or may provide different images to the eyes 121 and 125. As the display 110 provides the same image to the eyes 121 and 125 of the user 120, the user may appreciate a planar image (or a two dimensional (2D) image or a monoscopic image). As the display 110 provides the different images to the eyes 121 and 125 of the user 120, the user may appreciate a spatial image (or a three dimensional (3D) image or a stereoscopic image). Herein, the different images provided by the display 110 may be images considering a binocular disparity. The different images provided by the display 110 may be the spatial image (or the three dimensional image or the stereoscopic image).

For example, providing a 2D image may indicate displaying one image on the display 110. For example, providing a 2D image may mean displaying the same one image in each of two separate regions of the display 110. For example, providing a 2D image may indicate displaying the same one image in each of two separate regions of the display 110 that are visible only to a pupil of a different one among the eyes 121 and 125 of the user 120. For example, separating two regions in the display 110 may indicate that regions visible to each of the eyes 121 and 125, are distinguished. For example, separating two regions in the display 110 may indicate that regions visible to each of the eyes 121 and 125 are distinguished on the one display 110.

For example, providing a 3D image may indicate displaying two images separated from each other on the display 110. For example, providing a 3D image may indicate simultaneously displaying two images separated from each other on the display 110. For example, simultaneously displaying two separate images may indicate displaying two images in two regions of the display 110, which are configured with different pixels. For example, providing a 3D image may indicate displaying the same two images in two separate regions of display 110, respectively. For example, providing a 2D image may indicate displaying two images in two separate regions of the display 110 that are visible only to an eye of a different one among the eyes 121 and 125 of the user 120. For example, providing a 3D image may indicate sequentially displaying two images separated from each other on the display 110. For example, providing a stereoscopic image may indicate displaying a left eye image through a portion of a plurality of pixels included in the display 110 and displaying a right eye image through another portion of the plurality of pixels included in the display 110. For example, the display 110 may control a path of light of the portion so that the light of the portion of the plurality of pixels included in the display 110 reaches a left eye and does not reach a right eye. For example, the display 110 may control a path of light of the other portion so that the light of the other portion of the plurality of pixels included in the display 110 reaches the right eye and does not reach the left eye. Herein, the stereoscopic image may include the left eye image and the right eye image. Herein, the portion of the pixels and the other portion of the pixels may be determined based on a distance between the display 110 and the user. The portion of the pixels and the other portion of the pixels may be determined based on a binocular disparity of the user. The portion of the pixels and the other portion of the pixels may be determined based on depth information of an object displayed by the display 110.

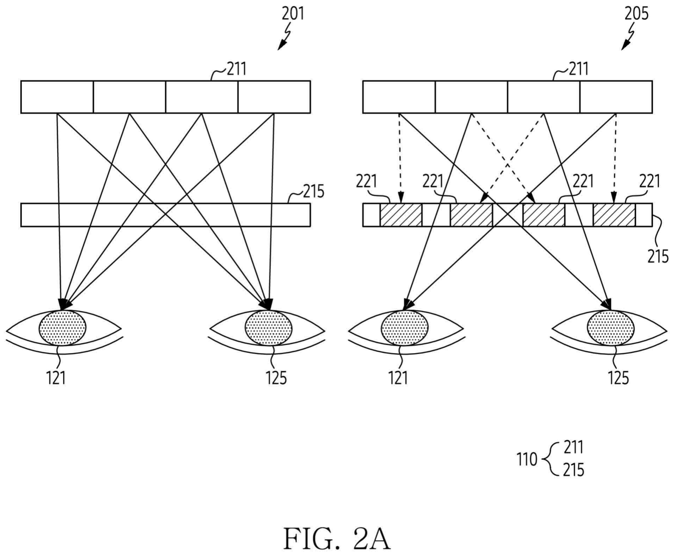

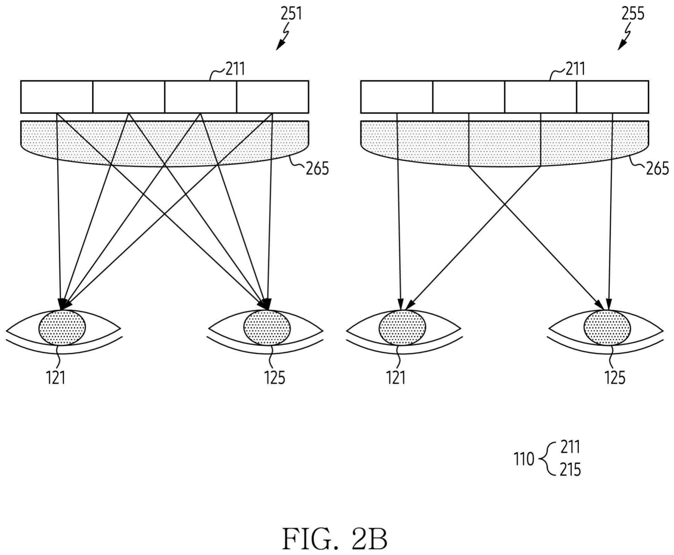

A portion of a structure in which the display 110 provides a 2D image and a 3D image to the user may be exemplified through FIGS. 2A and 2B. However, it is not limited thereto. The structure of the display 110 may adopt other structures in addition to structures exemplified through FIGS. 2A and 2B. For example, the display 110 may adopt a glasses-type display. For example, the display 110 may be an anaglyph glasses-type display, a polarization glasses-type display, or a shutter glasses-type display. For example, the display 110 may adopt a glasses-free display. For example, the display 110 may be a light field display, a hologram display, or a volumetric display. For example, the display 110 may be a light field display of another method other than a light field display exemplified through FIGS. 2A and 2B. For example, the display 110 may be a light field display of a lens array method, a projector array method, a grating array method, a layered panel method (or a tensor display method), or an aperture array method. For example, the display 110 may be provided in a wearable electronic device. For example, the display 110 may be a head mounted display (HMD).

FIG. 2A illustrates an example of a structure of a display for providing a 2D image and a 3D image to a user.

A display 110 exemplified in FIG. 2A may be referred to as a display of a parallax barrier method.

Referring to FIG. 2A, the display 110 may include a display panel 211, and a liquid crystal slit 215 that may be located on a front side of the display panel 211. The liquid crystal slit 215 may adjust whether light is transmitted or not. As the liquid crystal slit 215 adjusts whether light is transmitted or not, the same image or different images may be provided to eyes 121 and 125. However, it is not limited thereto. The liquid crystal slit 215 may be disposed between the display panel 211 and a light source (not illustrated).

For example, in a case that the liquid crystal slit 215 does not block light of the display panel 211 in a 3D image mode 201, an image displayed on the display panel 211 may be transmitted identically to the eyes 121 and 125.

For example, in a case that the liquid crystal slit 215 partially blocks light of the display panel 211 in a 3D image mode 205, an image displayed on the display panel 211 may be transmitted differently to the eyes 121 and 125. In the image, regions 221 blocking light in the liquid crystal slit 215 may be changed according to a distance between the display panel 211 and the eyes 121 and 125.

FIG. 2B illustrates another example of a structure of a display for providing a 2D image and a 3D image to a user.

A display 110 exemplified in FIG. 2B may be referred to as a display of a lenticular lens method.

Referring to FIG. 2B, the display 110 may include a display panel 211, and a lens array 265 that may be located on a front side of the display panel 211. The lens array 265 may adjust whether light is refracted or not. As the lens array 265 adjusts whether light is refracted or not, the same image or different images may be provided to eyes 121 and 125.

For example, in a case that the lens array 265 does not refract light of the display panel 211 in a 2D image mode 251, an image displayed on the display panel 211 may be transmitted identically to the eyes 121 and 125.

For example, in a case that the lens array 265 partially refracts light of the display panel 211 in a 3D image mode 255, an image displayed on the display panel 211 may be transmitted differently to the eyes 121 and 125. In the image, a degree to which light is refracted in the lens array 265 may be changed according to a distance between the display panel 211 and the eyes 121 and 125.

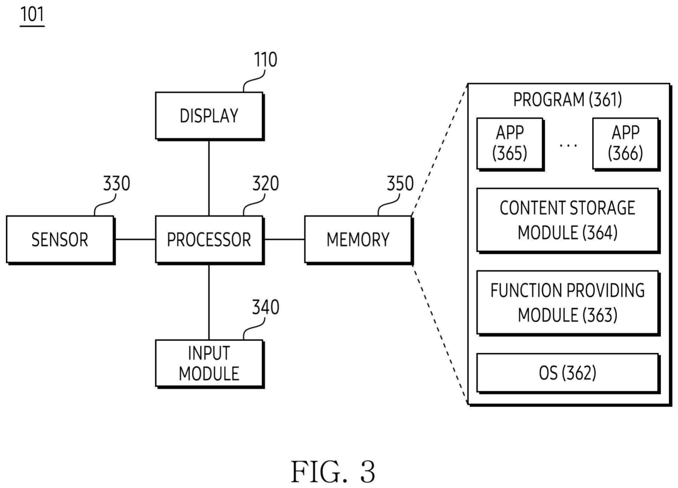

FIG. 3 is a simplified block diagram of an exemplary electronic device.

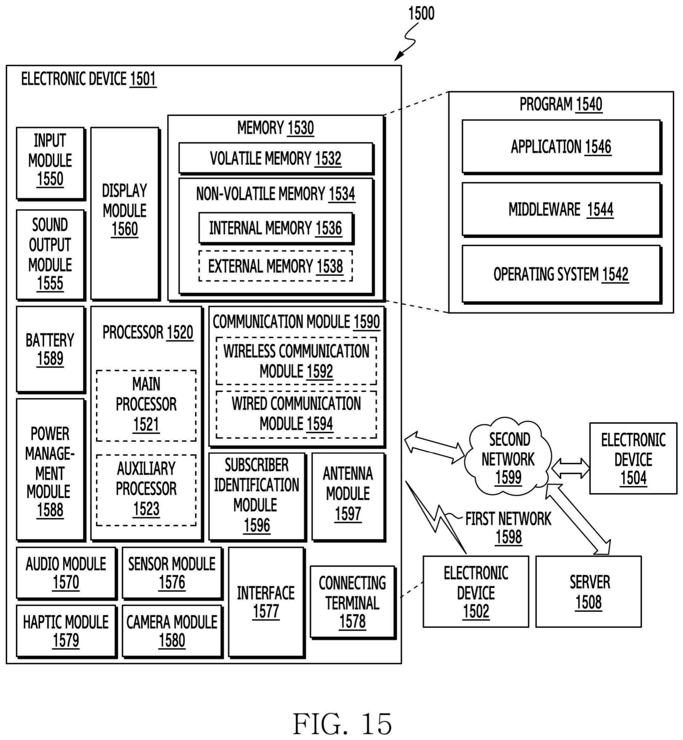

Referring to FIG. 3, an electronic device 101 may include a display 110, a processor 320, a sensor 330, an input module 340, and memory 350. For example, the display 110 may include at least a portion of a display module 1560 to be exemplified through FIG. 15. For example, the processor 320 may include at least a portion of a processor 1520 to be exemplified through FIG. 15. For example, the sensor 330 may include at least a portion of a sensor module 1576 to be exemplified through FIG. 15. For example, the input module 340 may include at least a portion of an input module 1550 to be exemplified through FIG. 15. For example, the memory 350 may include at least a portion of memory 1530 to be exemplified through FIG. 15. For example, the memory 350 may include a program 361. For example, the program 361 may include an operating system (OS) 362, a function providing module 363, a content storage module 364, and one or more applications (APPs) 365 and 366. For example, the program 361 may include at least a portion of a program 1540 to be exemplified through FIG. 15. The OS 362 may include at least a portion of functions provided by an operating system 1542 to be exemplified through FIG. 15. The function providing module 363 may include at least a portion of functions provided by middleware 1544 to be exemplified through FIG. 15. The content storage module 364 may include at least a portion of the functions provided by the middleware 1544 to be exemplified through FIG. 15. Each of the one or more APPs 365 and 366 may include at least a portion of functions provided by an application 1546 to be exemplified through FIG. 15.

For example, the processor 320 may be operably coupled to each of the display 110, the sensor 330, the input module 340, and the memory 350. For example, the processor 320 being operably coupled to each of the display 110, the sensor 330, the input module 340, and the memory 350 may indicate that the processor 320 is directly connected to each of the display 110, the sensor 330, the input module 340, and the memory 350. For example, the processor 320 being operably coupled to each of the display 110, the sensor 330, the input module 340, and the memory 350 may indicate that the processor 320 is connected to each of the display 110, the sensor 330, the input module 340, and the memory 350 through another component of the electronic device 101. For example, the processor 320 being operably coupled to each of the display 110, the sensor 330, the input module 340, and the memory 350 may indicate that each of the display 110, the sensor 330, the input module 340, and the memory 350 operates based on instructions executed by the processor 320. For example, the processor 320 being operably coupled to each of the display 110, the sensor 330, the input module 340, and the memory 350 may indicate that each of the display 110, the sensor 330, the input module 340, and the memory 350 is controlled by the processor 320. However, it is not limited thereto.

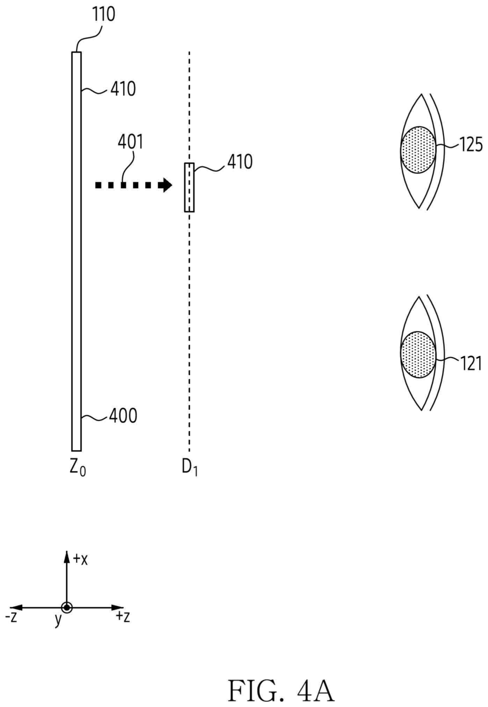

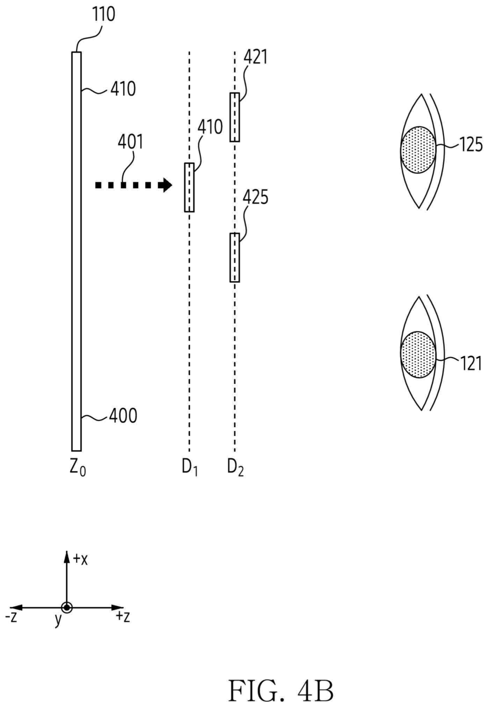

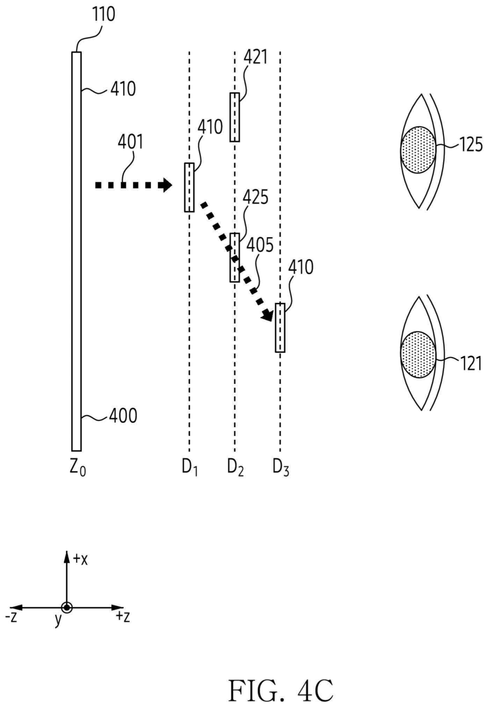

The processor 320 may execute operations for displaying, through the display 110, executable objects for executing functions that may be provided by linking to an object, in response to user input associated with the object. A portion of the operations may be exemplified through FIGS. 4A, 4B, and 4C.

The sensor 330 may detect a user 120. For example, the sensor 330 may detect eyes 121 and 125 of the user 120. For example, the sensor 330 may detect positions of the eyes 121 and 125 of the user 120. The processor 320 may identify a state of the user 120 based on a detection result of the sensor 330. For example, the processor 320 may identify a gaze of the user 120 based on the positions of the eyes 121 and 125. For example, the processor 320 may track the gaze of the user 120 based on the positions of the eyes 121 and 125. For example, the processor 320 may identify an object on the display 110 viewed by the user 120 based on the positions of the eyes 121 and 125.

The sensor 330 may detect the user 120. For example, the sensor 330 may detect a position of the user 120. For example, the sensor 330 may detect a distance between the electronic device 101 and the user 120. The processor 320 may identify a binocular disparity of the user 120 based on a detection result of the sensor 330. For example, the processor 320 may identify the binocular disparity of the user 120 based on the distance between the electronic device 101 and the user 120. For example, the processor 320 may generate a stereoscopic image including a left eye image and a right eye image to the user 120 based on the binocular disparity. Herein, the processor 320 may control the display 110 so that light of pixels of the display 110 displaying the left eye image of the stereoscopic image reaches only a left eye of the user 120, and light of pixels of the display 110 displaying the right eye image reaches only a right eye of the user 120.

The input module 340 may obtain input. The input module 340 may receive the input. For example, the input may be a motion of the user 120. For example, the input may be an electronic signal generated from an input device. For example, the input device may be included in the electronic device 101. For example, the input device may be a touch sensor or a pressure sensor. For example, the input device may be a vision sensor or a camera. For example, the input device may be a device separate from the electronic device 101. For example, the input device may be a microphone, a mouse, a keyboard, a key (e.g., a button), or a digital pen (e.g., a stylus pen).

The OS 362 may identify a position of user input. For example, the OS 362 may identify the position of the user input in a 3D space. The OS 362 may identify a direction of the user input. The OS 362 may identify a direction to which the user input is directed on the 3D space. The OS 362 may identify an object on the display 110 that is indicated (or designated) by the user input (or designates). For example, the OS 362 may identify the object on the display 110 based on the position of the user input and the direction of the user input. For example, the OS 362 may identify the object on the display 110 using a raycast based on the position of the user input and the direction of the user input. However, it is not limited thereto.

The function providing module 363 may set functions that may be provided by linking to an object. The function providing module 363 may set executable objects for executing the functions that may be provided by linking to the object in response to user input associated with the object.

The content storage module 364 may save an object or content associated with the object in an external region of a screen. The content storage module 364 may load the object or the content associated with the object saved in the external region of the screen. Based on user input, the content storage module 364 may display the external region of the screen to the user, or may cease displaying the external region of the screen.

Each of the one or more APPs 365 and 366 may generate a screen to be displayed on the display 110. Each of the one or more APPs 365 and 366 may generate a screen for providing a 2D image to the user 120. Each of the one or more APPs 365 and 366 may generate a screen for providing a 3D image to the user 120.

FIG. 4A illustrates an example of user input for an object.

Referring to FIG. 4A, a processor 320 may display a screen 400 on a display 110. FIG. 4A may be an image depicting the screen 400 displayed by the display 110 from a lateral side. When a user 120 views the display 110 from a front side, FIG. 4A indicates the screen 400 of the display 110, recognized by the user 120, from the lateral side.

At least one object 410 may be included in the screen 400. For example, the object 410 may be a user interface (UI). For example, the object 410 may be a visual object. For example, the object 410 may be text or an image. For example, the image may be a photo or an icon.

As an image for providing a 2D image is displayed on the display 110, the screen 400 may be displayed on the display 110. The image for providing a 2D image may be one image. The image for providing a 2D image may be a monoscopic image. In a case that a 2D image is displayed on the display 110, a depth value of the screen 400 may have a depth value Z₀ of the display 110.

As an image for providing a 3D image is displayed on the display 110, the screen 400 may be displayed on the display 110. The image for providing a 3D image may include two images separated from each other. The image for providing a 3D image may include a stereoscopic image. In a case that a 3D image is displayed on the display 110, the depth value of the screen 400 may be the same as or different from the depth value Z₀ of the display 110. For example, the processor 320 may display the screen 400 on the display 110 to have a depth value corresponding to a focal distance recognized by eyes 121 and 125 of the user 120. For example, the screen 400 may be displayed on the display 110 so as to be recognized by the user 120 as being displayed at a position moved by a predetermined distance (or a predetermined depth) in a -Z-axis. For example, the screen 400 may be displayed on the display 110 so as to be recognized by the user 120 as being displayed at a position moved by a predetermined distance (or a predetermined depth) in a +Z-axis. For example, the Z-axis may be an axis parallel to a direction to which the display 110 is directed. For example, the Z-axis may be an axis in which a side of the display 110 is parallel to a vertical direction. Herein, the side may be a plane of a point at which the object 410 is displayed on the display 110. However, it is not limited thereto. For example, the Z-axis may be an axis parallel to a direction in which a gaze of a user faces.

The processor 320 may obtain user input 401. The processor 320 may receive the user input 401. The processor 320 may obtain the user input 401 through an input module 340. For example, the input module 340 may be a stylus pen. For example, the input module 340 may be a gesture sensor (or a camera) capable of recognizing a gesture of the user 120. However, it is not limited thereto. For example, the input module 340 may be a sensor 330 (or a camera module 1580) capable of recognizing a gaze of the user 120 or movement of the gaze.

For example, the user input 401 may be input for selecting the object 410. For example, the user input 401 may be input for moving the object 410. For example, the user input 401 may be input for selecting the object 410 and moving the selected object 410. For example, the user input 401 may be initiated while the object 410 is displayed on the display 110 as a 2D image. For example, the user input 401 associated with the object 410 may be initiated while the screen 400 is displayed on the display 110 as one image. For example, the user input 401 associated with the object 410 may be initiated while the screen 400 is displayed on the display 110 as a monoscopic image. However, it is not limited thereto.

The processor 320 may process the user input 401.

For example, the processor 320 may select the object 410 in response to the input for selecting the object 410. As the user 120 selects the object 410, additional input for the object 410 may be possible. For example, the input for moving the selected object 410 may be possible. For example, the processor 320 may change display of the object 410 in response to the input for selecting the object 410. For example, in response to the user input 401 being movement for moving the object 410 in a Z-axis direction, the processor 320 may display the object 410 with a depth value different from that of the image 400. For example, the processor 320 may display the object 410 as a 3D image. For example, in response to the user input 401 being the movement for moving the object 410 in the Z-axis direction, the processor 320 may display the object 410 as the 3D image. For example, the processor 320 may display the object 410 as the 3D image in response to the user input 401 being inputted while displaying the screen 400 as a 2D image. For example, the processor 320 may display the screen 400 and the object 410 as 3D images on the display 110 in response to the user input 401 being inputted while displaying the screen 400 as the 2D image. However, it is not limited thereto.

For example, the processor 320 may move the object 410 in response to the input for moving the object 410. For example, the processor 320 may move the object 410 in response to input for moving the object 410 from Z₀ to D₁. For example, the processor 320 may move the object 410 by D₁ in a +Z direction in response to the input for moving the object 410 from Z₀ to D₁. For example, in response to the input for moving the object 410 from Z₀ by D₁, the processor 320 may display the object 410 on the display 110 so that the object 410 is recognized by the user 120 as being displayed at a position where the object 410 moves by D₁ in the +Z-axis. For example, the processor 320 may change display of the object 410 in response to the input for moving the object 410. For example, the processor 320 may display the object 410 as the 3D image.

FIG. 4B illustrates an example of display of an executable object according to user input for an object.

Referring to FIG. 4B, a processor 320 may display a screen 400 on a display 110. FIG. 4B may be an image depicting the screen 400 displayed by the display 110 from a lateral side. When a user 120 views the display 110 from a front side, FIG. 4B indicates the screen 400 of the display 110, recognized by the user 120, from the lateral side.

Referring to FIG. 4B, the processor 320 may display at least one executable object 421 and/or 425 on the display 110. For example, the at least one executable object 421 and/or 425 may be a visual object. For example, the at least one executable object 421 and/or 425 may be text or an image. For example, the image may be a photo, or an icon. For example, the at least one executable object 421 and/or 425 may be an object for a function supported for the object 410. For example, the at least one executable object 421 and/or 425 may be an object for an executable function associated with the object 410. The at least one executable object 421 and/or 425 may be an object for executing a function associated with search, translation, sharing, screenshot, pop-up, split, clip, or editing. Different functions may be mapped to (or associated with) the at least one executable object 421 and/or 425. For example, a search function may be mapped to the executable object 421, and a translation function may be mapped to the executable object 425.

For example, the at least one executable object 421 and/or 425 may be the object for executing the function associated with search, translation, sharing, screenshot, pop-up, split, clip, or editing. For example, the at least one executable object 421 and/or 425 may be set based on a type of the object 410. For example, in a case that the object 410 is text, the at least one executable object 421 and/or 425 for executing a function associated with search, clip, or translation may be displayed. For example, in a case that the object 410 is an image, the at least one executable object 421 and/or 425 for executing a function associated with sharing, screenshot, clip, or editing may be displayed. For example, in a case that the object 410 is an execution screen of an application, the at least one executable object 421 and/or 425 for executing a function associated with screenshot, pop-up, or split may be displayed.

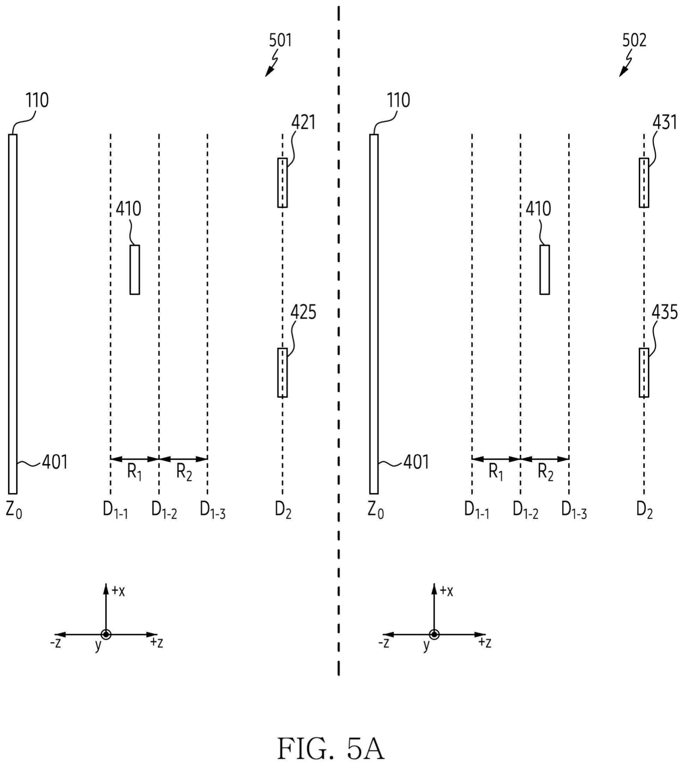

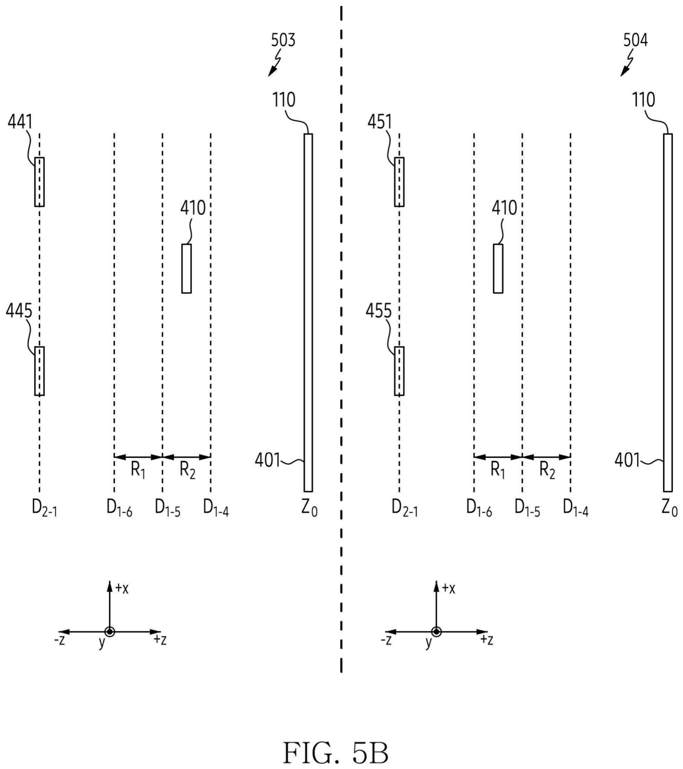

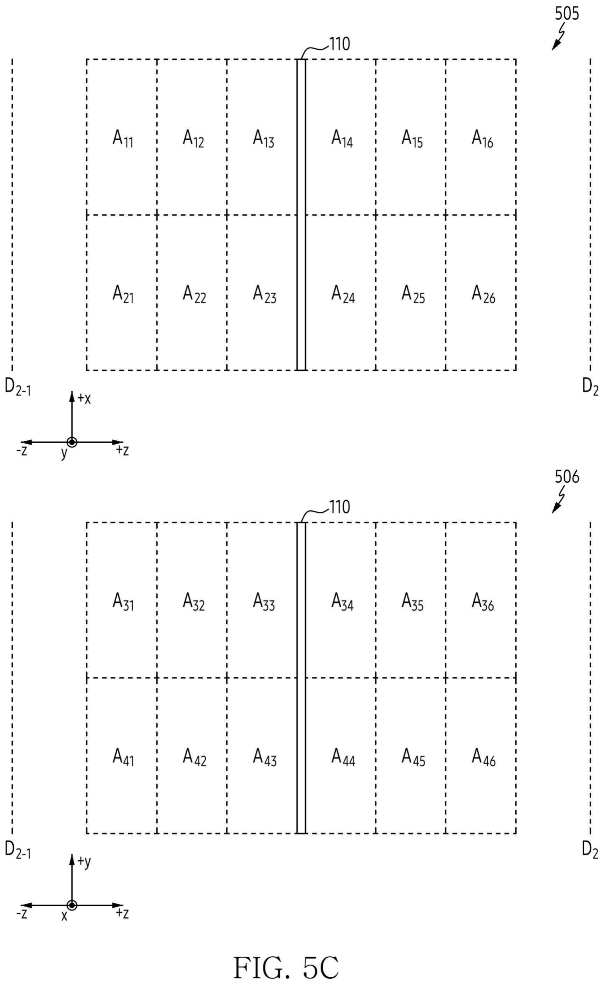

The processor 320 may display the at least one executable object 421 and/or 425 at a position separated from Z₀ by a reference depth. For example, the processor 320 may display the at least one executable object 421 and/or 425 at a position separated from Z₀ by D₂. For example, the processor 320 may display the at least one executable object 421 and/or 425 on the display 110 so that the at least one executable object 421 and/or 425 is recognized by the user 120 as being displayed at the position separated from Z₀ by D₂. However, it is not limited thereto. For example, the processor 320 may display the at least one executable object 421 and/or 425 at a position having the same depth D₁ as the object 410. For example, the processor 320 may display the at least one executable object 421 and/or 425 at a position between the depth Z₀ of the image 400 and the depth D₁ of the object 410. For example, the processor 320 may display the at least one executable object 421 and/or 425 at a position within a reference depth range from the depth D₁ of the object 410. For example, the processor 320 may display the at least one executable object 421 and/or 425 at a position moved by a reference distance in a -Z direction from the depth Z₀ of the screen 400. A portion of operations for displaying the executable objects 421 and 425 may be exemplified through FIGS. 5A, 5B, and 5C.

In response to user input 401 being input for moving the object 410 in a second direction (a ±Z-axis direction) parallel to a first direction (a +Z-axis direction) to which the display 110 is directed, the processor 320 may display the at least one executable object 421 and/or 425 on the display 110. In response to the user input 401 being input for moving the object 410 in the first direction (the +Z-axis direction) to which the display 110 is directed or in a direction (a -Z-axis direction) opposite to the first direction, the processor 320 may display the at least one executable object 421 and/or 425 on the display 110. In response to the user input 401 being input for moving the object 410 in a direction (the ±Z-axis direction) perpendicular to a side of the display 110, the processor 320 may display the at least one executable object 421 and/or 425 on the display 110. Herein, the side may be a plane of a point at which the object 410 is displayed on the display 110. For example, in response to the user input 401 being input for moving the object 410 in the +Z-axis direction or the -Z-axis direction by a preset distance, the processor 320 may display the at least one executable object 421 and/or 425 on the display 110. In response to a displacement in the Z-axis direction among displacements of each of axis directions of the object 410 corresponding to the preset distance by the user input 401, the processor 320 may display the at least one executable object 421 and/or 425 on the display 110. For example, the preset distance may be set differently according to a type of an application generating the screen 400, a type of the screen 400, a size of the object 410, or a type of the object 410. For example, in an application with a high frequency of user input, the preset distance may be set shorter to increase reactivity. For example, a preset distance of a web browser may be shorter than a preset distance of a gallery. For example, as separation (or detachment) of the object 410 from the screen 400 may be easily recognized, the preset distance may be set shorter. For example, a preset distance of a 2D image may be shorter than a preset distance of a 3D image. For example, as the size of the object 410 increases, the preset distance may be longer. For example, in a case that the object 410 is a 2D object (e.g., a 2D graphic-based object or a 3D graphic-based object), the preset distance may be shorter than that of a 3D object. A 3D graphic may be a technique for displaying geometric data including three-dimensional coordinates of each of a plurality of points forming the object, in 2D. However, it is not limited thereto.

In response to the user input 401 being input for moving the object 410 in a direction (e.g., an X-axis direction, a Y-axis direction, or a direction by a combination thereof) other than the +Z-axis direction or the -Z-axis direction, the processor 320 may not display the executable objects 421 and 425 on the display 110. In response to the user input 401 being input for moving the object 410 in a direction (e.g., the X-axis direction, the Y-axis direction, or the direction by the combination thereof) other than a direction (the Z-axis direction) perpendicular to a side of the display 110, the processor 320 may not display the executable objects 421 and 425 on the display 110. Herein, the side may be a plane of a point at which the object 410 is displayed on the display 110. For example, in response to the user input 401 being input for moving the object 410 by less than a preset distance in the +Z-axis direction or the -Z-axis direction, the processor 320 may not display the executable objects 421 and 425 on the display 110. In response to the displacement in the Z-axis direction among the displacements of each of the axis directions of the object 410 being zero by the user input 401, the processor 320 may not display the executable objects 421 and 425 on the display 110. In response to the displacement in the Z-axis direction among the displacements of each of the axis directions being within the preset distance by the user input 401, the processor 320 may not display the executable objects 421 and 425 on the display 110.

As described above, the user 120 of an electronic device 101 may experience more diverse user interactions with content (e.g., the screen 400 and the object 410) displayed on the electronic device 101 through input for controlling the object 410. For example, the electronic device 101 may provide the user 120 with new input associated with the object 410 by displaying the executable objects 421 and 425 that provide a function associated with the object 410, in response to the user input being input for moving the object 410 in the first direction (the +Z-axis direction) to which the display 110 is directed or in the direction (the -Z-axis direction) opposite to the first direction.

FIG. 4C illustrates an example of user input for an executable object.

A processor 320 may obtain user input 405. The processor 320 may receive the user input 405. The processor 320 may obtain the user input 405 through an input module 340. For example, the input module 340 may be a stylus pen. For example, the input module 340 may be a gesture sensor (or a camera) capable of recognizing a gesture of a user 120. However, it is not limited thereto. For example, the user input 405 may be a gaze of the user obtained through a sensor 330 or a camera (e.g., a camera module 1580 of FIG. 15).

For example, the user input 405 may be input for selecting an executable object 425. For example, the user input 405 may be input for moving an object 410 to the executable object 425. For example, the user input 405 may be input for moving the object 410 to be located in the executable object 425. For example, the user input 405 may be input for causing the object 410 to pass through the executable object 425. For example, the user input 405 may be input for linking the object 410 to the executable object 425. For example, the user input 405 may be input for causing the object 410 close to the executable object 425. For example, the user input 405 may be input for moving the object 410 within a designated distance from the executable object 425.

For example, the user input 405 may be input continued from user input 401. For example, the user input 405 may be scroll input, drag input, or gesture input continued from the user input 401. However, it is not limited thereto. For example, the user input 405 may be input separate from the user input 401. For example, the user input 405 may be touch input, click input, push input, or grasp input. For example, the user input 405 may be input different from the user input 401 obtained through the input module 340. For example, the user input 405 may be the gaze of the user obtained through the sensor 330 or the camera (e.g., the camera module 1580 of FIG. 15). For example, the user input 405 may be a gaze of the user viewing the executable object 425 while the user input 401 is maintained.

For example, the processor 320 may execute the executable object 425 in response to the user input 405. For example, when the object 410 is moved to the executable object 425 or passes through the executable object 425 in response to the user input 405, the processor 320 may execute a function associated with the executable object 425. For example, when the executable object 425 is selected in response to the user input 405, the processor 320 may execute the function associated with the executable object 425.

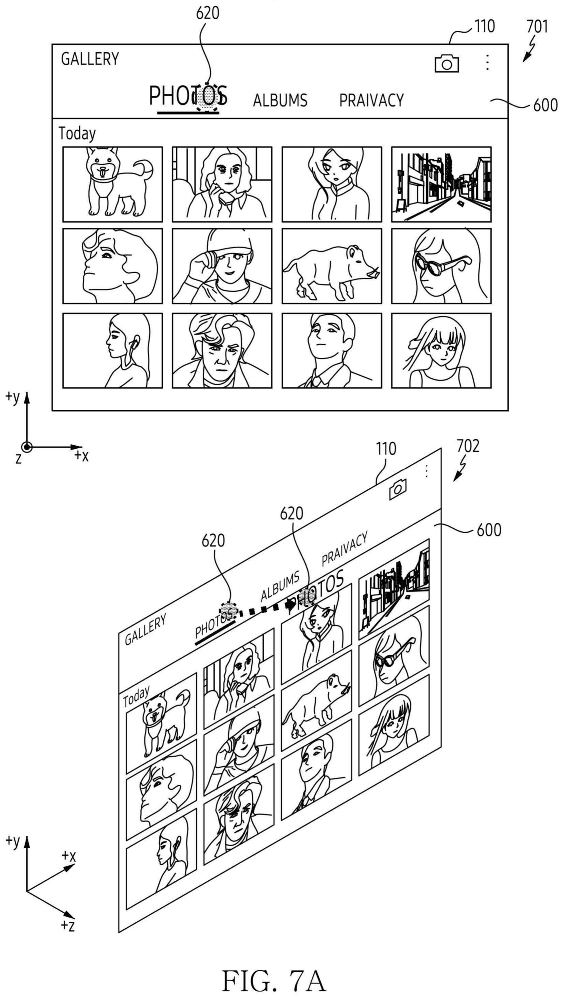

The processor 320 may process the user input 405. For example, the processor 320 may execute the function associated with the executable object 425 in response to the input for selecting the executable object 425. For example, in a case that the function associated with the executable object 425 is a search function, the processor 320 may search for information indicated by the object 410 through a web browser. For example, in a case that the function associated with the executable object 425 is the search function, the processor 320 may display a search result of the information indicated by the object 410 on a display 110. A portion of operations for executing a function associated with executable objects 421 and 425 may be exemplified through FIGS. 7A, 7B, 8A, 8B, 8C, 8D, and 9A to 9C.

The processor 320 may change display of the display 110 in response to execution of the function associated with the executable object 425. For example, the processor 320 may change the display of the display 110 in a method in which the display 110 was displayed before the user input 401. For example, in a case that the display 110 displays a screen 400 as a 2D image, the processor 320 may display the screen 400 in 2D in response to execution of the function associated with the executable object 425. However, it is not limited thereto. For example, in a case that the display 110 displays the screen 400 as a 3D image, the processor 320 may display the screen 400 in 3D in response to execution of the function associated with the executable object 425.

As described above, the user 120 of the electronic device 101 may select an object that the user 120 may intuitively execute, by selecting an executable object through the input 405 continued from the input 401 for the object 410. Additionally, or alternatively, the user 120 of the electronic device 101 may variously provide the user 120 with methods to select an executable object, by selecting an executable object through other input discontinuous from the input 401 for the object 410.

FIG. 5A illustrates an example of display of an executable object according to a position of an object.

Referring to FIG. 5A, a processor 320 may display different executable objects 421, 425, 431, and 435 according to a position of an object 410. FIG. 5A may be an image depicting a screen displayed by a display 110 from a lateral side. When a user 120 views the display 110 from a front side, FIG. 5A indicates the screen of the display 110, recognized by the user 120, from the lateral side.

For example, in a case that the object 410 is located within a first reference distance range, the processor 320 may display the executable objects 421 and 425. For example, when the object 410 is located within a second reference distance range that does not overlap the first reference distance range, the processor 320 may display the executable objects 431 and 435. For example, the processor 320 may display the objects 421, 425, 431, and 435 as a spatial image on the display 110.

For example, in a case that the object 410 is located within a predefined first depth range R₁ between a depth D₁₋₁ to a depth D₁₋₂, as in a state 501, the processor 320 may display the executable objects 421 and 425. For example, in a case that the object 410 is located within a predefined second depth range R₁ between a depth D₁₋₂ to a depth D₁₋₃, as in a state 502, the processor 320 may display the executable objects 431 and 435. However, it is not limited thereto.

For example, the processor 320 may display executable objects defined differently according to characteristic of user input for the object 410. For example, the processor 320 may display executable objects defined differently according to characteristic of user input for moving the object 410 in a Z-axis direction. For example, the processor 320 may display executable objects defined differently according to characteristic of movement of user input for moving the object 410 in the Z-axis direction by a reference distance or more. For example, the characteristic of the movement may include trajectory of the movement, velocity, acceleration, or a combination thereof.

For example, the processor 320 may display executable objects defined differently according to the velocity of the movement of the user input for moving the object 410 in the Z-axis direction. For example, the processor 320 may display executable objects defined differently according to the trajectory of the movement of the user input for moving the object 410 in the Z-axis direction. For example, the processor 320 may display executable objects defined differently according to the characteristic of the user input for the object 410 and a depth range in which the object 410 is located.

Functions mapped to the executable objects 421 and 425 and functions mapped to the executable objects 431 and 435 may be at least partially different from each other. For example, a function mapped to the executable object 421 and a function mapped to the executable object 431 may be the same, and a function mapped to the executable object 425 and a function mapped to the executable object 435 may be different from each other. For example, the function mapped to the executable object 421 and the function mapped to the executable object 431 may be a translation function. For example, the function mapped to the executable object 425 may be a sharing function, and the function mapped to the executable object 435 may be a search function.

The functions mapped to the executable objects 421 and 425 and the functions mapped to the executable objects 431 and 435 may be different from each other. For example, functions mapped to each of the executable objects 421, 425, 431, and 435 may be different from each other. For example, the function mapped to the executable object 421 may be a translation function, the function mapped to the executable object 425 may be a sharing function, the function mapped to the executable object 431 may be a storage function, and the function mapped to the executable object 435 may be a search function.

As described above, the electronic device 101 may provide the user 120 with various functions for the object 410 through one continuous input by displaying the various executable objects 421, 425, 431, and 435 according to a degree to which the user 120 moves the object 410.

FIG. 5B illustrates an example of display of an executable object according to a position of an object.

Referring to FIG. 5B, a processor 320 may display different executable objects 441, 445, 451, and 455 according to a position of an object 410. When a user 120 views a display 110 from a front side, FIG. 5B indicates a screen of the display 110, recognized by the user 120, from a lateral side.

For example, in a case that the object 410 is located within a predefined third depth range R₃ between a depth D₁₋₄ to a depth D₁₋₅ in a -Z-axis direction, as in a state 503, the processor 320 may display the executable objects 441 and 445. For example, in a case that the object 410 is located within a predefined fourth depth range R₄ between a depth D₁₋₅ to a depth D₁₋₆, as in a state 504, the processor 320 may display the executable objects 451 and 455.

Functions mapped to the executable objects 441 and 445 and functions mapped to the executable objects 451 and 455 may be at least partially different from each other. For example, a function mapped to the executable object 441 and a function mapped to the executable object 451 may be the same, and a function mapped to the executable object 445 and a function mapped to the executable object 455 may be different from each other. For example, the function mapped to the executable object 441 and the function mapped to the executable object 451 may be a deletion function. For example, the function mapped to the executable object 445 may be a modification function and the function mapped to the executable object 455 may be a translation function.

The functions mapped to the executable objects 441 and 445 and the functions mapped to the executable objects 451 and 455 may be different from each other. For example, functions mapped to each of the executable objects 441, 445, 451, and 455 may be different from each other. For example, the function mapped to the executable object 441 may be a deletion function, the function mapped to the executable object 445 may be a modification function, the function mapped to the executable object 451 may be a storage function, and the function mapped to the executable object 455 may be a translation function.

As described above, as the user 120 moves the object 410 in a +Z-axis direction or the - Z-axis direction of a screen 400, the various executable objects 441, 445, 451, and 455 are displayed, so that the electronic device 101 may provide the user 120 with the various executable objects 441, 445, 451, and 455 by subdividing a 3D space.

FIG. 5C illustrates an example of regions in which executable objects are set.

Referring to FIG. 5C, a state 505 and a state 506 may be images depicting a screen displayed by a display 110 from a lateral side. When a user 120 views the display 110 from a front side, the state 505 indicates the screen of the display 110, recognized by the user 120, from the lateral side. When the user 120 views the display 110 from the front side, the state 506 indicates the screen of the display 110, recognized by the user 120, from another lateral side orthogonal to the state 505.

A processor 320 may distinguish regions that do not overlap each other. The processor 320 may distinguish a region extending from the display 110 in a +Z-axis direction or a -Z-axis direction into regions that do not overlap each other.

For example, as in the state 505, the processor 320 may distinguish regions A₁₁, A₁₂, A₁₃, A₁₄, A₁₅, A₁₆, A₂₁, A₂₂, A₂₃, A₂₄, A₂₅, and A₂₆ based on different X-Y planes (or planes parallel to the display 110 with different depths, or different planes perpendicular to a Z-axis) and different Y-Z planes (or different planes perpendicular to an X-axis). For example, as in the state 506, the processor 320 may distinguish regions A₃₁, A₃₂, A₃₃, A₃₄, A₃₅, A₃₆, A₄₁, A₄₂, A₄₃, A₄₄, A₄₅, and A₄₆ based on different X-Y planes (or planes parallel to the display 110 with different depths) and different X-Z planes (or different planes perpendicular to a Y-axis). However, it is not limited thereto. For example, the processor 320 may distinguish regions based on different planes perpendicular to the Z-axis, different planes perpendicular to the X-axis, and different planes perpendicular to the Y-axis.

The processor 320 may set executable objects to be displayed in a case that an object 410 is located with respect to each of the distinguished regions. For example, in the state 505, the processor 320 may set at least one executable object to be displayed in a case that the object 410 is located in the region A₁₁. For example, in the state 506, the processor 320 may set at least one executable object to be displayed in a case that the object 410 is located in the region A₃₁.

The processor 320 may set executable objects to be displayed in a case that the object 410 is located with respect to each of partial regions among the distinguished regions. For example, in the state 505, the processor 320 may set executable objects to be displayed in a case that the object 410 is located with respect to each of the regions A₁₁, A₁₂, A₁₃, A₁₄, A₁₅, and A₁₆ among the distinguished regions A₁₁, A₁₂, A₁₃, A₁₄, A₁₅, A₁₆, A₂₁, A₂₂, A₂₃, A₂₄, A₂₅, and A₂₆. For example, in the state 506, the processor 320 may set executable objects to be displayed in a case that the object 410 is located with respect to each of the regions A₃₁, A₃₂, A₃₃, A₃₄, A₃₅, and A₃₆ among the distinguished regions A₃₁, A₃₂, A₃₃, A₃₄, A₃₅, A₃₆, A₄₁, A₄₂, A₄₃, A₄₄, A₄₅, and A₄₆.

As described above, as the user 120 moves the object 410 in another direction (e.g., an X-axis direction and/or a Y-axis direction) together with the +Z-axis direction or the -Z-axis direction of a screen 400, various executable objects are displayed, so that the electronic device 101 may provide the user 120 with the various executable objects by subdividing a 3D space into the plurality of regions A₁₁, A₁₂, A₁₃, A₁₄, A₁₅, A₁₆, A₂₁, A₂₂, A₂₃, A₂₄, A₂₅, A₂₆, A₃₁, A₃₂, A₃₃, A₃₄, A₃₅, A₃₆, A₄₁, A₄₂, A₄₃, A₄₄, A₄₅, and A₄₆.

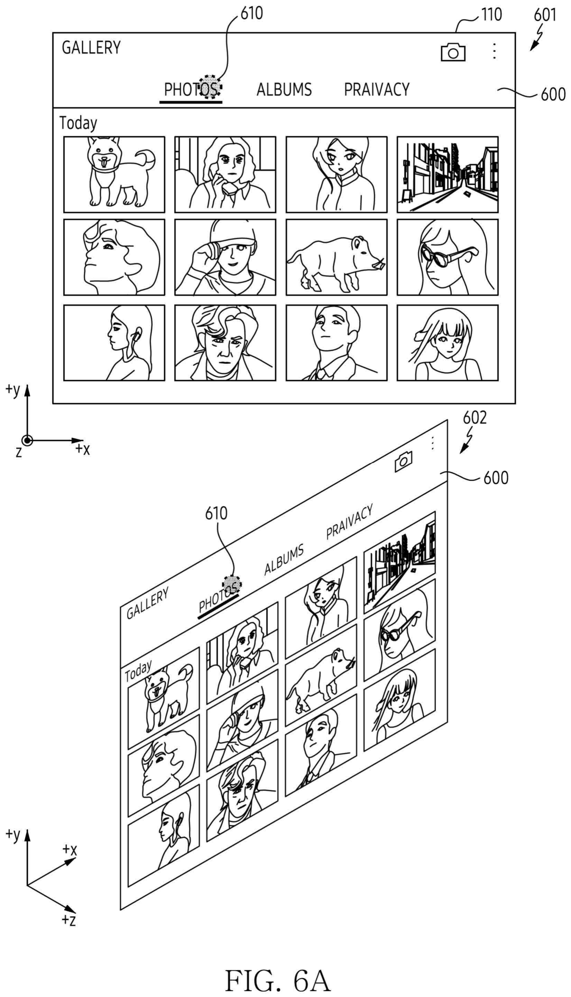

FIG. 6A illustrates an example of user input for an object.

Referring to FIG. 6A, a screen 600 of a gallery application may be displayed on a display 110. An image 601 may be an image depicting a screen displayed by the display 110 from a front side, and an image 602 may be an image depicting the screen 600 displayed by the display 110 from an oblique angle. When a user 120 views the display 110 from the front side, the image 602 is a representation, in three dimensions, of the screen 600 indicated by the display 110 recognized by the user 120. When the user 120 views the display 110 from the oblique angle, the image 602 is not a representation of the screen 600 indicated by the display 110 recognized by the user 120.

The screen 600 may include one or more objects. The one or more objects may include text, an image, and an icon. For example, a text object displayed on the display 110 may include "GALLERY," "PHOTOS," "ALBUMS," "PRIVACY," and "TODAY". For example, an image object displayed on the display 110 may include twelve thumbnail images. However, it is not limited thereto.

A processor 320 may obtain user input 610. For example, the processor 320 may obtain the user input 610 through an input module 340. For example, the processor 320 may obtain the user input 610 including an operation of a digital pen. For example, the processor 320 may obtain position information of a digital pen (e.g., a direction and a position to which the digital pen is directed) as the user input 610. For example, the processor 320 may obtain a button operation (e.g., click or push) of the digital pen as the user input 610. For example, the processor 320 may obtain the button operation of the digital pen and the position information of the digital pen as the user input 610. However, it is not limited thereto. For example, the processor 320 may obtain a motion of the user 120 as the user input 610. For example, the processor 320 may obtain a gesture of the user 120 as the user input 610. For example, the processor 320 may obtain touch input, click input, push input, or grasp input obtained through the input module 340 as the user input 610. For example, the user input 405 may be a gaze of the user obtained through a sensor 330 or a camera (e.g., a camera module 1580 of FIG. 15).

For example, the user input 610 may be input for selecting an object. For example, the user input 610 may be input for selecting a text object "PHOTOS". For example, the processor 320 may recognize a case that the button operation (e.g., click or push) of the digital pen is applied while the digital pen points to the text object "PHOTOS" as the input for selecting the text object "PHOTOS". For example, the processor 320 may recognize a case that a designated gesture (e.g., grasp input) of the user is applied while the user (or a part (e.g., a hand) of a body of the user) points to the text object "PHOTOS" as the input for selecting the text object "PHOTOS". The object pointed to by the digital pen or the user may be identified based on a raycast. However, it is not limited thereto.

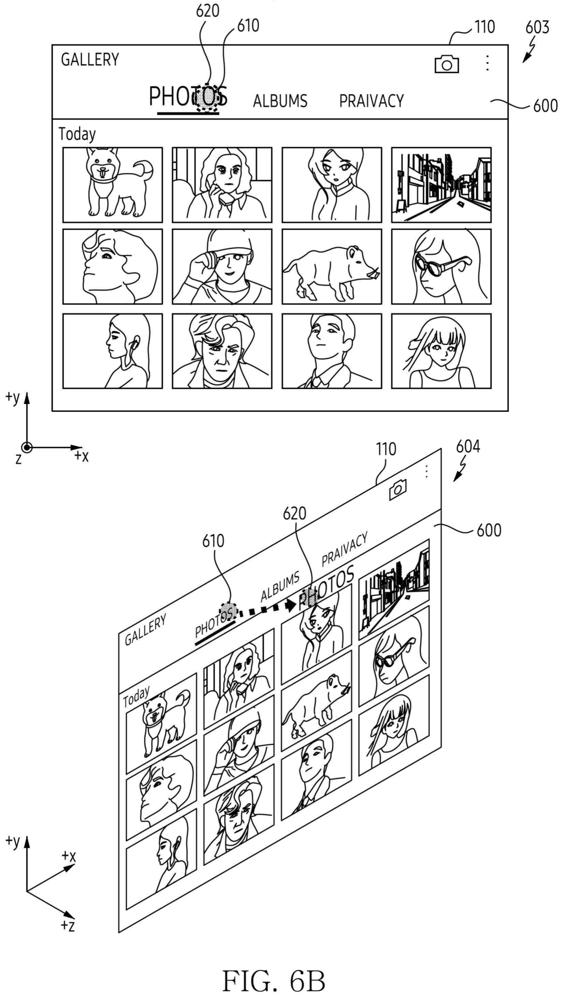

The processor 320 may process the user input 610. For example, the processor 320 may select the text object "PHOTOS" in response to the user input 610 for selecting the text object "PHOTOS". As the user 120 selects the text object "PHOTOS", additional input for the text object "PHOTOS" may be possible. For example, input for moving the selected text object "PHOTOS" may be possible. A portion of operations associated with the input for moving the selected text object "PHOTOS" may be exemplified through FIG. 6B.

FIG. 6B illustrates an example of movement of an object according to user input for the object.

Referring to FIG. 6B, a screen 600 of a gallery application may be displayed on a display 110. An image 603 may be an image depicting a screen displayed by the display 110 from a front side, and an image 604 may be an image depicting the screen 600 displayed by the display 110 from an oblique angle. When a user 120 views the display 110 from the front side, the image 604 is a representation, in three dimensions, of the screen 600 indicated by the display 110 recognized by the user 120. When the user 120 views the display 110 from the oblique angle, the image 604 is not a representation of the screen 600 indicated by the display 110 recognized by the user 120.

A processor 320 may obtain user input 620. For example, the processor 320 may obtain the user input 620 through an input module 340. For example, the processor 320 may obtain the user input 620 including an operation of a digital pen. For example, the processor 320 may obtain position information of a digital pen (e.g., a direction and a position to which the digital pen is directed) as the user input 620. For example, the processor 320 may obtain a button operation (e.g., click or push) of the digital pen as the user input 620. For example, the processor 320 may obtain the button operation of the digital pen and the position information of the digital pen as the user input 620. However, it is not limited thereto. For example, the processor 320 may obtain a motion of the user 120 as the user input 620. For example, the processor 320 may obtain touch input, click input, push input, or grasp input obtained through the input module 340 as the user input 620. For example, the user input 405 may be a gaze of the user obtained through a sensor 330 or a camera (e.g., a camera module 1580 of FIG. 15).

For example, the user input 620 may be input for moving an object. For example, the user input 620 may be input for moving a text object "PHOTOS". For example, the user input 620 may be input continued from user input 610. For example, the user input 620 may be inputted while the user input 610 is maintained. For example, the user input 620 may be inputted while the user input 610 for selecting the text object "PHOTOS" is maintained.

For example, the processor 320 may recognize a case that a position of the digital pen is moved while the user input 610 is maintained as the input for moving the text object "PHOTOS". For example, the processor 320 may recognize a case that a motion of the user is applied while the user input 610 is maintained as the input for moving the text object "PHOTOS". However, it is not limited thereto. For example, the user input 620 may be scroll input, drag input, or gesture input. For example, the user input 405 may be the gaze of the user obtained via the sensor 330 or the camera (e.g., the camera module 1580 of FIG. 15).

The processor 320 may process the user input 620. For example, the processor 320 may move the text object "PHOTOS" in response to the user input 620 for moving the text object "PHOTOS".

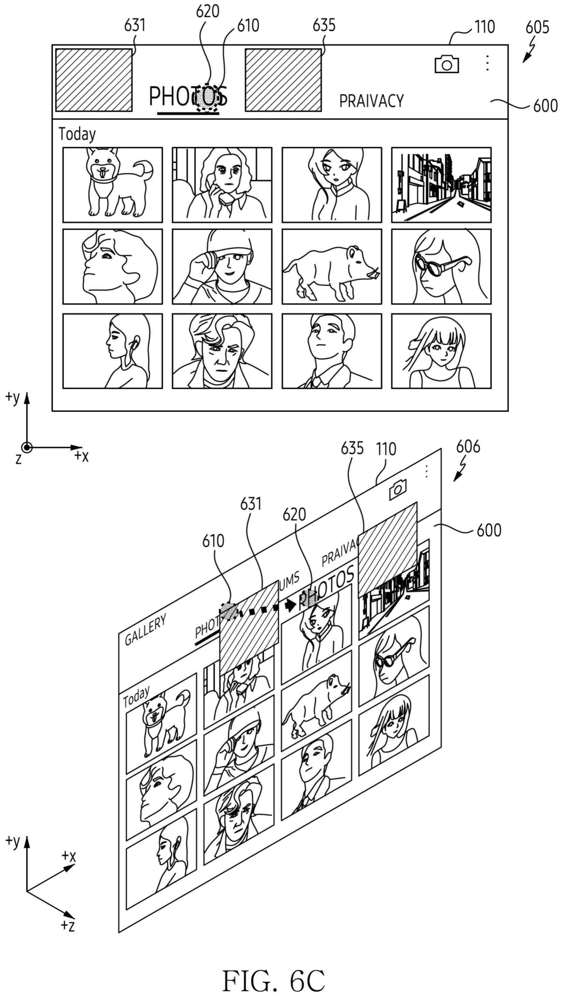

The processor 320 may change display of the text object "PHOTOS" in response to the user input 620. For example, in response to the user input 620 being movement for moving the text object "PHOTOS" in a Z-axis direction, the processor 320 may display the text object "PHOTOS" with a depth value different from that of a screen. A portion of operations associated with the input for moving the selected text object "PHOTOS" in the Z-axis direction may be exemplified through FIG. 6C.

FIG. 6C illustrates an example of display of an executable object according to user input for an object.

Referring to FIG. 6C, a screen 600 of a gallery application may be displayed on a display 110. An image 605 may be an image depicting the screen 600 displayed by the display 110 from a front side, and an image 606 may be an image depicting the screen 600 displayed by the display 110 from an oblique angle. When a user 120 views the display 110 from the front side, the image 606 is a representation, in three dimensions, of the screen 600 indicated by the display 110 recognized by the user 120. When the user 120 views the display 110 from the oblique angle, the image 606 is not a representation of the screen 600 indicated by the display 110 recognized by the user 120.

A processor 320 may display at least one executable object 631 and/or 635 on the display 110 in response to user input 620. The processor 320 may display the at least one executable object 631 and/or 635 on the display 110 in response to input for moving a text object "PHOTOS". For example, the processor 320 may display the at least one executable object 631 and/or 635 on the display 110 in response to input for moving the text object "PHOTOS" by a designated distance or more in a Z-axis direction. For example, the at least one executable object 631 and/or 635 may be a visual object. For example, the at least one executable object 631 and/or 635 may be text or an image. For example, the image may be a photo, or an icon. For example, the at least one executable object 631 and/or 635 may be an object for a function supported for the text object "PHOTOS". For example, the at least one executable object 631 and/or 635 may be an object for an executable function associated with the text object "PHOTOS". The at least one executable object 631 and/or 635 may be an object for executing a function associated with search, translation, sharing, screenshot, pop-up, split screen, clip, storage, or editing. Different functions may be mapped to (or associated with) the at least one executable object 631 and/or 635. For example, a search function may be mapped to the executable object 631, and a translation function may be mapped to the executable object 635.

The processor 320 may display the at least one executable object 631 and/or 635 at a position separated from a depth (e.g., Z₀) of the screen 600 by a reference depth. For example, the processor 320 may display the at least one executable object 631 and/or 635 on the display 110 so that the at least one executable object 631 and/or 635 is recognized by the user 120 as being displayed at the position separated by the reference depth. However, it is not limited thereto. For example, the processor 320 may display the at least one executable object 631 and/or 635 at a position having the same depth as the text object "PHOTOS" moved by the user input 620. For example, the processor 320 may display the at least one executable object 631 and/or 635 at a position between a depth of the screen 600 and a depth of the moved text object "PHOTOS". For example, the processor 320 may display the at least one executable object 631 and/or 635 at a position within a reference depth range from the depth of the text object "PHOTOS". For example, the processor 320 may display the at least one executable object 631 and/or 635 at a position moved by a reference distance in the -Z direction from the depth of the screen 600.

In response to the user input 620 being input for moving the text object "PHOTOS" in a Z-axis direction (a +Z-axis direction or the -Z-axis direction) to which the display 110 is directed, the processor 320 may display the at least one executable object 631 and/or 635 on the display 110. For example, in response to the user input 620 being input for moving the text object "PHOTOS" by a preset distance in the Z-axis direction, the processor 320 may display the at least one executable object 631 and/or 635 on the display 110. In response to a displacement in the Z-axis direction among displacements of each of axis directions of the text object "PHOTOS" corresponding to the preset distance by the user input 620, the processor 320 may display the at least one executable object 631 and/or 635 on the display 110. For example, the preset distance may be set differently according to a type of an application generating the screen 600, a type of the screen 600, a size of the text object "PHOTOS", or a type of the text object "PHOTOS".

In response to the user input 620 being input for moving the text object "PHOTOS" in a direction (e.g., an X-axis direction, a Y-axis direction, or a direction by a combination thereof) other than the Z-axis direction, the processor 320 may not display the executable objects 631 and 635 on the display 110. For example, in response to the user input 620 being input for moving the text object "PHOTOS" by less than the preset distance in the Z-axis direction, the processor 320 may not display the executable objects 631 and 635 on the display 110. In response to the displacement in the Z-axis direction among the displacements of each of the axis directions of the text object "PHOTOS" being zero by the user input 620, the processor 320 may not display the executable objects 631 and 635 on the display 110. In response to the displacement in the Z-axis direction among the displacements of each of the axis directions being within the preset distance by the user input 620, the processor 320 may not display the executable objects 631 and 635 on the display 110.

FIG. 7A illustrates an example of an execution result of a function associated with an executable object.

FIG. 7A may exemplify a situation after the executable objects 631 and 635 are displayed on the display 110 according to FIG. 6C.

Referring to FIG. 7A, a screen 600 of a gallery application may be displayed on the display 110. An image 701 may be an image depicting the screen 600 displayed by the display 110 from a front side, and an image 702 may be an image depicting the screen 600 displayed by the display 110 from an oblique angle. When a user 120 views the display 110 from the front side, the image 702 is a representation, in three dimensions, of the screen 600 displayed by the display 110 recognized by the user 120. When the user 120 views the display 110 from the oblique angle, the image 702 is not a representation of the screen 600 displayed by the display 110 recognized by the user 120.

A processor 320 may obtain user input. The processor 320 may receive user input. For example, the processor 320 may obtain user input for selecting the executable object 631.

For example, the processor 320 may recognize a case that a digital pen points to the executable object 631 as the user input for selecting the executable object 631. For example, the processor 320 may recognize a case that a button operation (e.g., click, push, or release) of the digital pen is applied while the digital pen points to the executable object 631 as the user input for selecting the executable object 631. For example, the processor 320 may recognize a case that the user (or a part (e.g., a hand) of a body of the user) points to the executable object 631 as the user input for selecting the executable object 631. For example, the processor 320 may recognize a case that a designated gesture (e.g., grasp input) of the user is applied while the user (or the part (e.g., the hand) of the body of the user) points to the executable object 631 as the input for selecting the executable object 631. However, it is not limited thereto. For example, the processor 320 may recognize a case that a gaze of the user points to the executable object 631 as the user input for selecting the executable object 631. For example, the processor 320 may recognize a case that a designated gesture (e.g., eye blinking) of the user is applied while the gaze of the user points to the executable object 631 as the input for selecting the executable object 631. However, it is not limited thereto.

For example, the processor 320 may execute a function associated with the executable object 631. For example, the processor 320 may execute the function associated with the executable object 631 for a text object "PHOTOS". For example, the processor 320 may execute the function associated with the executable object 631. For example, the processor 320 may execute the function associated with the executable object 631 for the text object "PHOTOS" selected by user input 610. For example, the processor 320 may execute the function associated with the executable object 631 for the text object "PHOTOS" moved by user input 620. For example, the processor 320 may execute the function associated with the executable object 631 in response to user input. For example, the processor 320 may execute the function associated with the executable object 631 in response to the user input for selecting the executable object 631. For example, the function associated with the executable object 631 may be a translation function.

The processor 320 may provide an execution result of the function associated with the executable object 631. The processor 320 may provide the user 120 with the execution result of the function associated with the executable object 631. The processor 320 may display the execution result of the function associated with the executable object 631 through the display 110. For example, in a case that the function associated with the executable object 631 is the translation function, the processor 320 may display a translated text object " 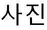 " instead of the text object "PHOTOS". For example, in a case that the function associated with the executable object 631 is the translation function, the processor 320 may display the translated text object " 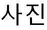 " in a region where the text object "PHOTOS" was located by the user input 620. For example, in a case that the function associated with the executable object 631 is the translation function, the processor 320 may display the translated text object " 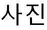 " in the region where the text object "PHOTOS" was located while the user input 610 is maintained.

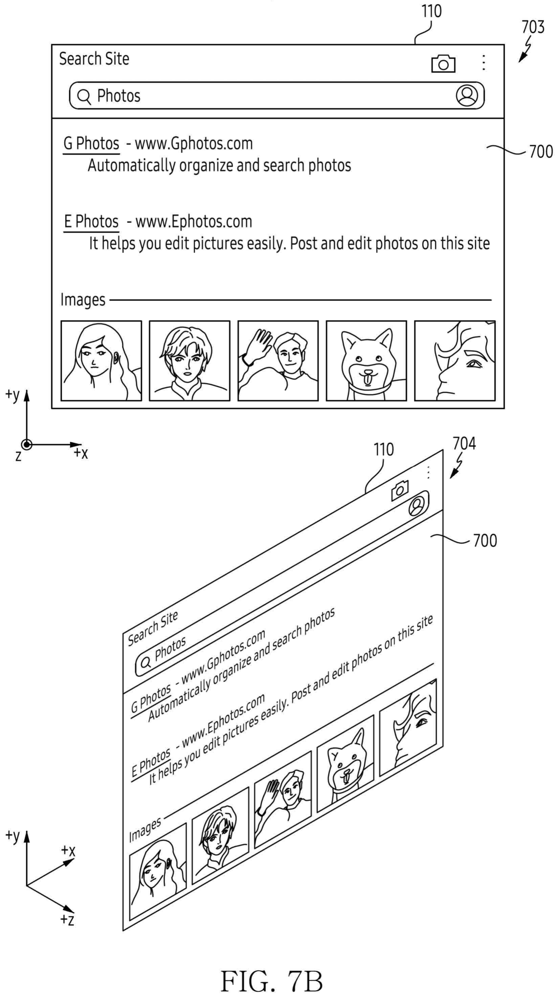

FIG. 7B illustrates another example of an execution result of a function associated with an executable object.

Referring to FIG. 7B, a screen 700 of a gallery application may be displayed on a display 110. An image 703 may be an image depicting the screen 700 displayed by the display 110 from a front side, and an image 704 may be an image depicting the screen 700 displayed by the display 110 from an oblique angle. When a user 120 views the display 110 from the front side, the image 704 is a representation, in three dimensions, of the screen 700 indicated by the display 110 recognized by the user 120. When the user 120 views the display 110 from the oblique angle, the image 704 is not a representation of the screen 700 indicated by the display 110 recognized by the user 120.

A processor 320 may obtain user input. The processor 320 may receive user input. For example, the processor 320 may obtain user input for selecting an executable object 635.

For example, the processor 320 may execute a function associated with the executable object 635. For example, the processor 320 may execute the function associated with the executable object 635 for a text object "PHOTOS". For example, the function associated with the executable object 635 may be a search function.

The processor 320 may provide an execution result of the function associated with the executable object 635. The processor 320 may provide the user 120 with the execution result of the function associated with the executable object 635. The processor 320 may display the execution result of the function associated with the executable object 635 through the display 110. The processor 320 may display a screen indicating the execution result of the function associated with the executable object 635 through the display 110.

For example, in a case that the function associated with the executable object 635 is a search function, the processor 320 may search for information indicated by the text object "PHOTOS" through a web browser. For example, in a case that the function associated with the executable object 635 is the search function, the processor 320 may search for the information indicated by the text object "PHOTOS" through the web browser. For example, in a case that the function associated with the executable object 635 is the search function, the processor 320 may provide the user 120 with a search result of the information indicated by the text object "PHOTOS". For example, in a case that the function associated with the executable object 635 is the search function, the processor 320 may display the search result of the information indicated by the text object "PHOTOS" through the display 110. For example, the processor 320 may output the search result of the information indicated by the text object "PHOTOS" through the screen 700 generated by the web browser. For example, the processor 320 may display the search result of the information indicated by the text object "PHOTOS" as a pop-up screen on a screen 600 generated by the gallery application. For example, in a case that the function associated with the executable object 635 is the search function, the processor 320 may output the search result of the information indicated by the text object "PHOTOS" through a sound output module 1555 to be described in FIG. 15. Herein, the screen 700 generated by the web browser may be a screen indicating an execution result.

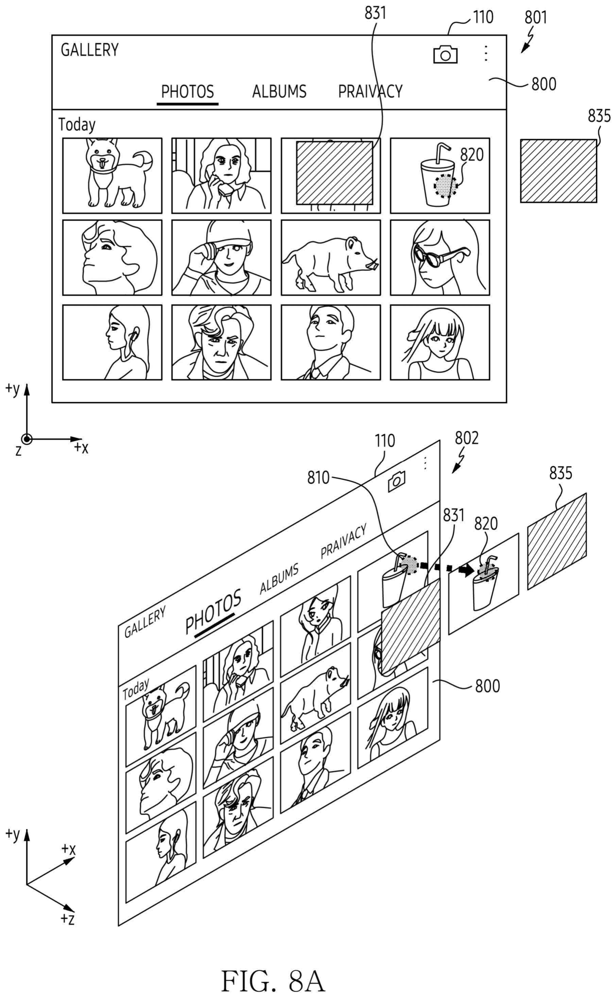

FIG. 8A illustrates an example of display of an executable object according to user input for an object.

Referring to FIG. 8A, a screen 800 of a gallery application may be displayed on a display 110. An image 801 may be an image depicting the screen 800 displayed by the display 110 from a front side, and an image 802 may be an image depicting the screen 800 displayed by the display 110 from an oblique angle. When a user 120 views the display 110 from the front side, the image 802 is a representation, in three dimensions, of the screen 800 indicated by the display 110 recognized by the user 120. When the user 120 views the display 110 from the oblique angle, the image 802 is not a representation of the screen 800 indicated by the display 110 recognized by the user 120.

A processor 320 may obtain user input 810. For example, the user input 810 may be input for selecting an object. For example, the user input 810 may be input for selecting an image object. For example, the processor 320 may recognize a case that a button operation (e.g., click or push) of a digital pen is applied while the digital pen points to an image object as input for selecting the image object. For example, the processor 320 may recognize a case that a designated gesture (e.g., grasp input) of the user is applied while the user (or a part (e.g., a hand) of a body of the user) points to an image object as input for selecting the image object. However, it is not limited thereto. For example, the user input 810 may be touch input, click input, push input, or grasp input.

The processor 320 may process the user input 810. For example, the processor 320 may select an image object in response to the user input 810 for selecting the image object. As the user 120 selects the image object, additional input for the image object may be possible. For example, input for moving the selected image object may be possible.

The processor 320 may obtain user input 820. For example, the processor 320 may obtain the user input 820 through an input module 340. For example, the processor 320 may obtain the user input 820 including an operation of the digital pen. For example, the processor 320 may obtain position information (e.g., a direction and a position to which the digital pen is directed) of the digital pen as the user input 820. For example, the processor 320 may obtain the button operation (e.g., click or push) of the digital pen as the user input 820. For example, the processor 320 may obtain the button operation of the digital pen and the position information of the digital pen as the user input 820.

For example, the user input 820 may be input for moving an object. For example, the user input 820 may be input for moving an image object. For example, the user input 820 may be input continued from the user input 810. For example, the user input 820 may be inputted while the user input 810 is maintained. For example, the user input 820 may be inputted while the user input 810 for selecting the image object is maintained. For example, the user input 820 may be scroll input, drag input, or gesture input. For example, the user input 405 may be a gaze of the user obtained through a sensor 330 or a camera (e.g., a camera module 1580 of FIG. 15).

The processor 320 may process the user input 820. For example, the processor 320 may move the image object in response to the user input 820 for moving the image object.

The processor 320 may change display of the image object in response to the user input 820. For example, in response to the user input 820 being movement for moving the image object in a Z-axis direction, the processor 320 may display the image object with a depth value different from that of a screen.

The processor 320 may display at least one executable object 831 and/or 835 on the display 110 in response to the user input 820. The processor 320 may display the at least one executable object 831 and/or 835 on the display 110 in response to input for moving an image object. For example, the processor 320 may display the at least one executable object 831 and/or 835 on the display 110 in response to input for moving the image object by a designated distance or more in the Z-axis direction. For example, the at least one executable object 831 and/or 835 may be a visual object. For example, the at least one executable object 831 and/or 835 may be text or an image. For example, the image may be a photo, or an icon. For example, the at least one executable object 831 and/or 835 may be an object for a function supported for the image object. For example, the at least one executable object 831 and/or 835 may be an object for an executable function associated with the image object. The at least one executable object 831 and/or 835 may be an object for executing a function associated with search, translation, sharing, screenshot, pop-up, split screen, clip, deletion, or editing. Different functions may be mapped to the at least one executable object 831 and/or 835. For example, a sharing function may be mapped to the executable object 831, and a deletion function may be mapped to the executable object 835.

The processor 320 may display the at least one executable object 831 and/or 835 at a position spaced apart from a depth (e.g., Z₀) of the screen 800 by a reference depth. For example, the processor 320 may display the at least one executable object 831 and/or 835 on the display 110 so that the at least one executable object 831 and/or 835 is recognized by the user 120 as being displayed at the position spaced apart by the reference depth.

In response to the user input 820 being input for moving the image object in the Z-axis direction (a +Z-axis direction or a -Z-axis direction) to which the display 110 is directed, the processor 320 may display the at least one executable object 831 and/or 835 on the display 110. For example, in response to the user input 820 being input for moving the image object in the Z-axis direction by a preset distance, the processor 320 may display the at least one executable object 831 and/or 835 on the display 110. In response to a displacement in the Z-axis direction among displacements of each of axis directions of the image object corresponding to the preset distance by the user input 820, the processor 320 may display the at least one executable object 831 and/or 835 on the display 110. For example, the preset distance may be set differently according to a type of an application generating the screen 800, a type of the screen 800, a size of the image object, or a type of the image object.

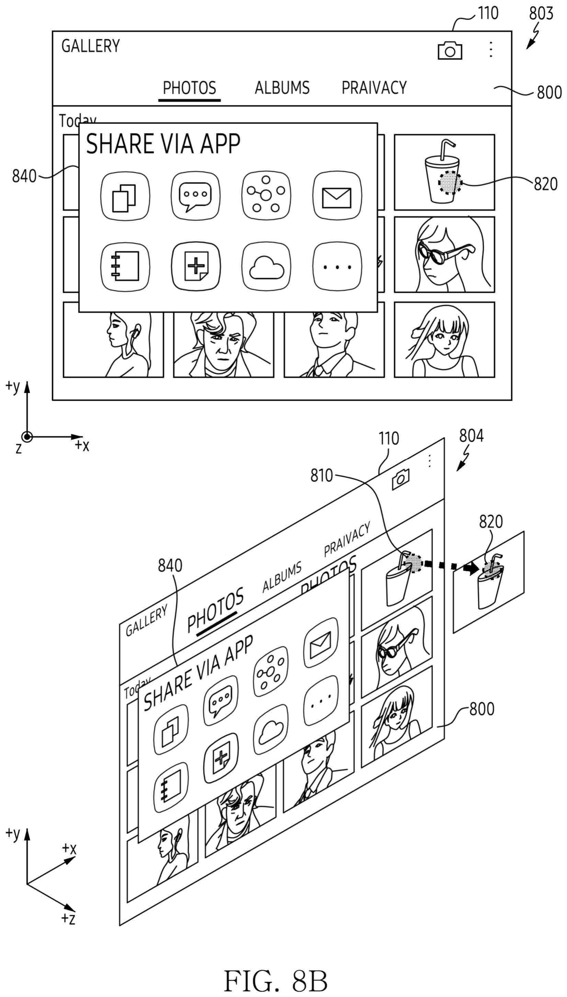

FIG. 8B illustrates an example of an execution result of a function associated with an executable object.

Referring to FIG. 8B, a screen 800 of a gallery application may be displayed on a display 110. An image 803 may be an image depicting the screen 800 displayed by the display 110 from a front side, and an image 804 may be an image depicting the screen 800 displayed by the display 110 from an oblique angle. When a user 120 views the display 110 from the front side, the image 804 is a representation, in three dimensions, of the screen 800 indicated by the display 110 recognized by the user 120. When the user 120 views the display 110 from the oblique angle, the image 804 is not a representation of the screen 800 indicated by the display 110 recognized by the user 120.

A processor 320 may obtain user input. The processor 320 may receive user input. For example, the processor 320 may obtain user input for selecting an executable object 831.

For example, the processor 320 may recognize a case that a digital pen points to the executable object 831 as the user input for selecting the executable object 831. For example, the processor 320 may recognize a case that a button operation (e.g., click, push, or release) of the digital pen is applied while the digital pen points to the executable object 831 as the user input for selecting the executable object 831. For example, the processor 320 may recognize a case that the user (or a part (e.g., a hand) of a body of the user) points to the executable object 831 as the user input for selecting the executable object 831. For example, the processor 320 may recognize a case that a designated gesture (e.g., grasp input) of the user is applied while the user (or the part (e.g., the hand) of the body of the user) points to the executable object 831 as the input for selecting the executable object 831. However, it is not limited thereto. For example, the processor 320 may recognize a case that a gaze of the user points to the executable object 831 as the user input for selecting the executable object 831. For example, the processor 320 may recognize a case that a designated gesture (e.g., eye blinking) of the user is applied while the gaze of the user points to the executable object 831 as the input for selecting the executable object 831. However, it is not limited thereto.

For example, the processor 320 may execute a function associated with the executable object 831. For example, the processor 320 may execute the function associated with the executable object 831 for an image object. For example, the processor 320 may execute the function associated with the executable object 831. For example, the processor 320 may execute the function associated with the executable object 831 for an image object selected by user input 810. For example, the processor 320 may execute the function associated with the executable object 831 in response to user input. For example, the processor 320 may execute the function associated with the executable object 831 in response to the user input for selecting the executable object 831. For example, the function associated with the executable object 831 may be a sharing function. For example, the function associated with the executable object 831 may be display of an object 840 associated with the sharing function.

The processor 320 may provide an execution result of the function associated with the executable object 831. The processor 320 may provide the user 120 with the execution result of the function associated with the executable object 831. The processor 320 may display the execution result of the function associated with the executable object 831 through the display 110. For example, in a case that the function associated with the executable object 831 is the sharing function, the processor 320 may display the object 840 associated with the sharing function through the display 110.

The processor 320 may obtain user input for the object 840 associated with the sharing function. The processor 320 may obtain user input for a sharing target (e.g., an application or an address) in the object 840 associated with the sharing function.

In response to obtaining the user input for the object 840 associated with the sharing function, the processor 320 may transmit an image object to the sharing target. In response to obtaining the user input for the screen 840 associated with the sharing function, the processor 320 may transmit the image object to the sharing target.

In response to sharing the image object, the processor 320 may not display the object 840 associated with the sharing function. For example, in response to sharing the image object, the processor 320 may display, on the display 110, the screen 800 in which the object 840 is not displayed.

An operation of FIG. 8B is not limited to the gallery application. For example, the sharing function may also be applied to objects included in a web browser or a message application.

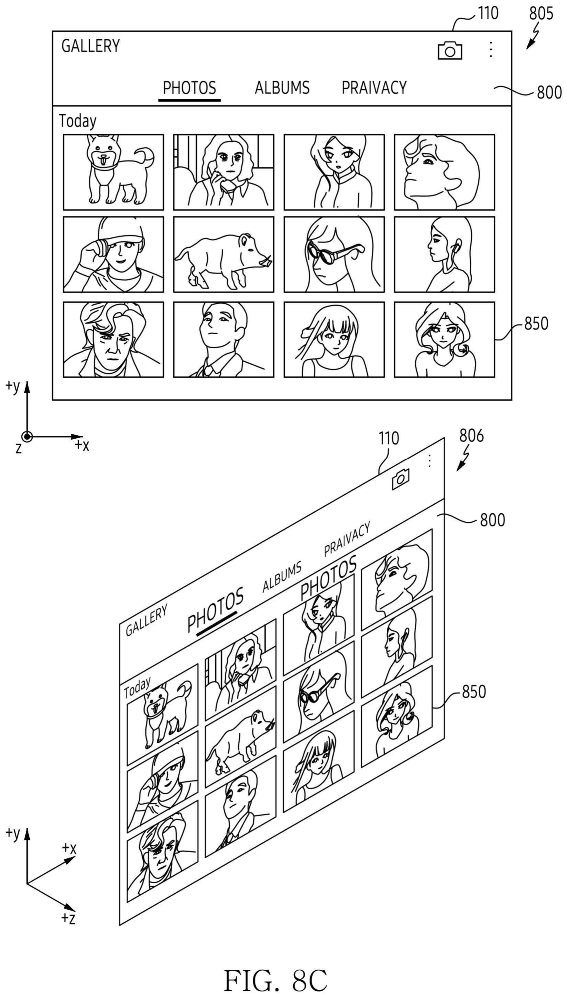

FIG. 8C illustrates an example of an execution result of a function associated with an executable object.

Referring to FIG. 8C, a screen 800 of a gallery application may be displayed on a display 110. An image 805 may be an image depicting the screen 800 displayed by the display 110 from a front side, and an image 806 may be an image depicting the screen 800 displayed by the display 110 from an oblique angle. When a user 120 views the display 110 from the front side, the image 806 is a representation, in three dimensions, of the screen 800 indicated by the display 110 recognized by the user 120. When the user 120 views the display 110 from the oblique angle, the image 806 is not a representation of the screen 800 indicated by the display 110 recognized by the user 120.

A processor 320 may obtain user input. The processor 320 may receive user input. For example, the processor 320 may obtain user input for selecting an executable object 835. For example, the user input may be obtained through a digital pen or a user (or a part (e.g., a hand) of a body of the user). However, it is not limited thereto.

For example, the processor 320 may execute a function associated with the executable object 835. For example, the processor 320 may execute the function associated with the executable object 835 for an image object. For example, the processor 320 may execute the function associated with the executable object 835. For example, the processor 320 may execute the function associated with the executable object 835 for an image object selected by user input 810. For example, the processor 320 may execute the function associated with the executable object 835 in response to user input. For example, the processor 320 may execute the function associated with the executable object 835 in response to the user input for selecting the executable object 835. For example, the function associated with the executable object 835 may be a deletion function. For example, the function associated with the executable object 831 may be deletion of the image object selected by the user input 810.

The processor 320 may provide an execution result of the function associated with the executable object 835. The processor 320 may provide the user 120 with the execution result of the function associated with the executable object 835. The processor 320 may display the execution result of the function associated with the executable object 835 through the display 110. For example, in a case that the function associated with the executable object 835 is the deletion function, the processor 320 may display, through the display 110, the screen 800 in which the image object selected by the user input 810 is deleted. For example, in a case that the image object selected by the user input 810 is deleted, a new image object 850 may be displayed in the gallery application.

An operation of FIG. 8C is not limited to the gallery application. For example, the deletion function may also be applied to objects (e.g., text objects) included in a document editing application.

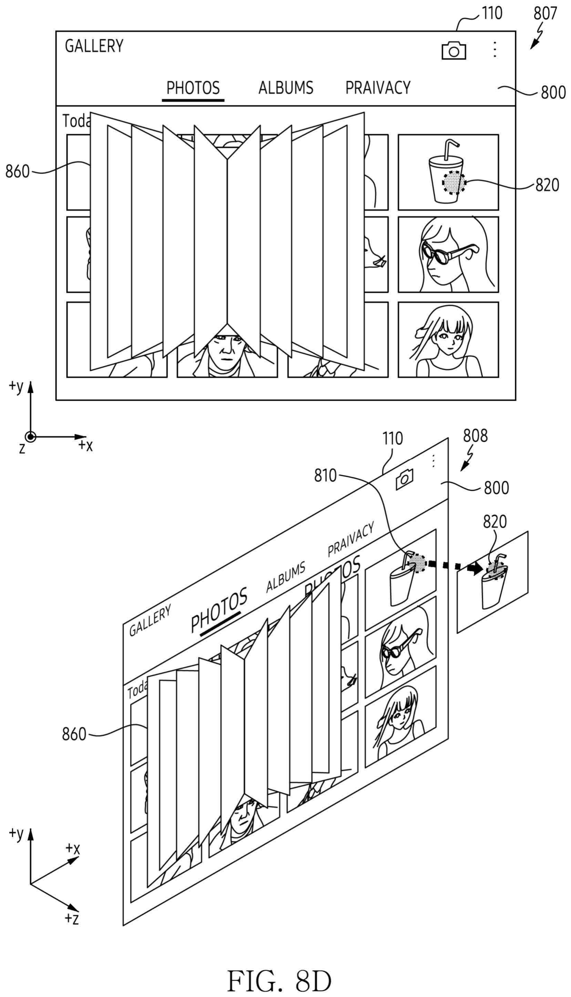

FIG. 8D illustrates an example of an execution result of a function associated with an executable object.

Referring to FIG. 8D, a screen 800 of a gallery application may be displayed on a display 110. An image 807 may be an image depicting the screen 800 displayed by the display 110 from a front side, and an image 808 may be an image depicting the screen 800 displayed by the display 110 from an oblique angle. When a user 120 views the display 110 from the front side, the image 808 is a representation, in three dimensions, of the screen 800 indicated by the display 110 recognized by the user 120. When the user 120 views the display 110 from the oblique angle, the image 808 is not a representation of the screen 800 indicated by the display 110 recognized by the user 120.

A processor 320 may obtain user input. The processor 320 may receive user input. For example, the processor 320 may obtain user input for selecting an executable object 831.

For example, the processor 320 may execute a function associated with the executable object 831. For example, the processor 320 may execute the function associated with the executable object 831 for an image object. For example, the processor 320 may execute the function associated with the executable object 831 for an image object selected by user input 810. For example, the processor 320 may execute the function associated with the executable object 831 for an image object moved by user input 820. For example, the processor 320 may execute the function associated with the executable object 831 in response to user input. For example, the processor 320 may execute the function associated with the executable object 831 in response to the user input for selecting the executable object 831. For example, the function associated with the executable object 831 may be a clip function. For example, the function associated with the executable object 831 may be display of an object 860 associated with the clip function.

The processor 320 may provide an execution result of the function associated with the executable object 831. The processor 320 may provide the user 120 with the execution result of the function associated with the executable object 831. The processor 320 may display the execution result of the function associated with the executable object 831 through the display 110. For example, in a case that the function associated with the executable object 831 is the clip function, the processor 320 may display the object 860 associated with the clip function through the display 110.

The processor 320 may obtain user input for the object 860 associated with the clip function. The processor 320 may obtain user input for a storage section (e.g., bookmark, password, ticket, family, office, and travel) in the object 860 associated with the clip function. For example, a term "storage section" may indicate a category of an object. For example, the term "storage section" may indicate a category in which an object is saved.

In response to obtaining the user input for the object 860 associated with the clip function, the processor 320 may save an image object in the storage section. In response to saving the image object in the storage section, the processor 320 may process the object 860 associated with the clip function. For example, in response to saving the image object in the storage section, the processor 320 may not display the object 860 associated with the clip function. For example, in response to clipping the image object, the processor 320 may display the screen 800 on the display 110 in which the object 860 is not displayed.

An operation of FIG. 8D is not limited to the gallery application. For example, the clip function may also be applied to objects included in a web browser, a document editing application, or a message application.

The object 860 of FIG. 8D is not limited to a function of saving an object selected by the user 120. For example, the processor 320 may load the object saved in the object 860 by the user 120. For example, the processor 320 may load the object saved in the object 860 by the user 120 into an application. For example, the processor 320 may display the object saved in the object 860 by the user 120 on a screen of the application.

The processor 320 may display the object 860 on the display 110. The processor 320 may display the object 860 on the display 110 in response to user input for displaying the object 860.

The processor 320 may obtain additional user input. For example, the additional user input may be input for selecting another object saved in the object 860. For example, the additional user input may be input for moving the other object saved in the object 860.

In response to obtaining the additional user input for the object 860, the processor 320 may load the object moved by the additional user input into an application of the screen 800. For example, in response to obtaining the additional user input for the object 860, the processor 320 may display the object moved by the additional user input on the screen 800.

In response to displaying the object moved by the additional user input on the screen 800, the processor 320 may process the object 860. For example, in response to displaying the object moved by the additional user input on the screen 800, the processor 320 may not display the object 860. For example, in response to displaying the object moved by the additional user input on the screen 800, the processor 320 may display, on the display 110, the screen 800 in which the object 860 is not displayed.

The object 860 of FIG. 8D may be set for each user. For example, the processor 320 may authenticate the user 120. For example, the processor 320 may authenticate the user 120 based on user identification (ID). For example, the processor 320 may authenticate the user 120 based on biometric information (e.g., fingerprint, voiceprint, and vein) of the user 120. The processor 320 may display, on the display 110, the object 860 including a storage section (e.g., bookmark, password, ticket, family, office, and travel) of the authenticated user 120.

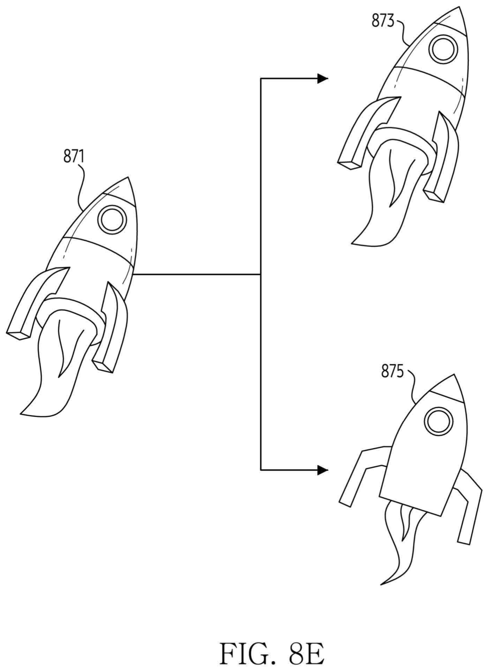

FIG. 8E illustrates an example of an execution result of a function associated with an executable object.

A representation method of an object 871 loaded from the object 860 of FIG. 8A may be changed for each application. For example, in a case that the object 871 loaded from the object 860 is supported by an application, a processor 320 may not change display of the object 871 loaded from the object 860. For example, in a case that the object 871 loaded from the object 860 is not supported by the application, the processor 320 may change the display of the object 871 loaded from the object 860. Herein, the object 871 being supported by the application may indicate that the object 871 may be displayed in the application based on shape information of the object 871.

Referring to FIG. 8E, in a case that the object 871 loaded from the object 860 is supported by the application, the processor 320 may include the object 871, whose display has not been changed, in a screen of the application. For example, in a case that the application supports a 3D object and the object 871 loaded from the object 860 is a 3D object, the processor 320 may render the object 871 loaded from the object 860 as the 3D object.

For example, in a case that the object 871 loaded from the object 860 is not supported by the application, the processor 320 may include an object 875, whose display has been changed, in the screen of the application. For example, in a case that the application does not support the 3D object and the object 871 loaded from the object 860 is the 3D object, the processor 320 may render the object 871 loaded from the object 860 as a 2D object (e.g., a 2D graphic or a 3D graphic). Herein, as the object 871, which is the 3D object, is rendered as the 2D object (e.g., the 2D graphic or the 3D graphic), it may be indicated that some information in the shape information of the object 871 is lost. For example, as the object 871, which is the 3D object, is rendered as the 2D object (e.g., the 2D graphic or the 3D graphic), information in a Z-axis direction may be lost.

For example, in a case that the application does not support the 3D object and the object 871 loaded from the object 860 is the 3D object, the processor 320 may display, on the screen of the application, an object changed from the 3D object loaded from the object 860 to the 2D object.

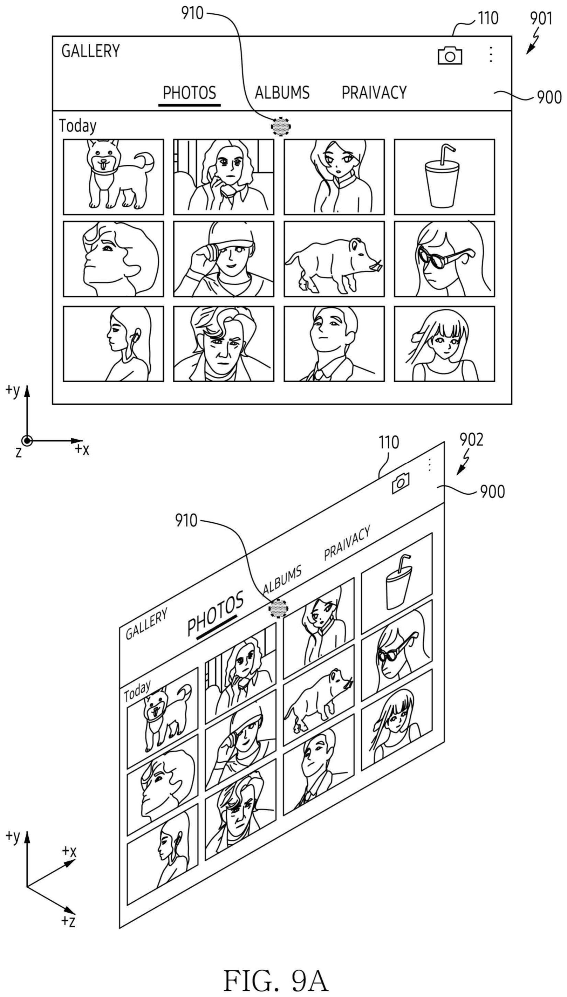

FIG. 9A illustrates an example of user input for an object.

Referring to FIG. 9A, a screen 900 of a gallery application may be displayed on a display 110. An image 901 may be an image depicting the screen 900 displayed by the display 110 from a front side, and an image 902 may be an image depicting the screen 900 displayed by the display 110 from an oblique angle. When a user 120 views the display 110 from the front side, the image 902 is a representation, in three dimensions, of the screen 900 indicated by the display 110 recognized by the user 120. When the user 120 views the display 110 from the oblique angle, the image 902 is not a representation of the screen 900 indicated by the display 110 recognized by the user 120.

A processor 320 may obtain user input 910. For example, the user input 910 may be input for selecting an object. For example, the user input 910 may be input for selecting the screen 900. For example, the processor 320 may obtain user input for selecting an executable object 835. For example, the user input may be obtained through a digital pen or a user (or a part (e.g., a hand) of a body of the user). However, it is not limited thereto. For example, the user input 910 may be touch input, click input, push input, or grasp input.

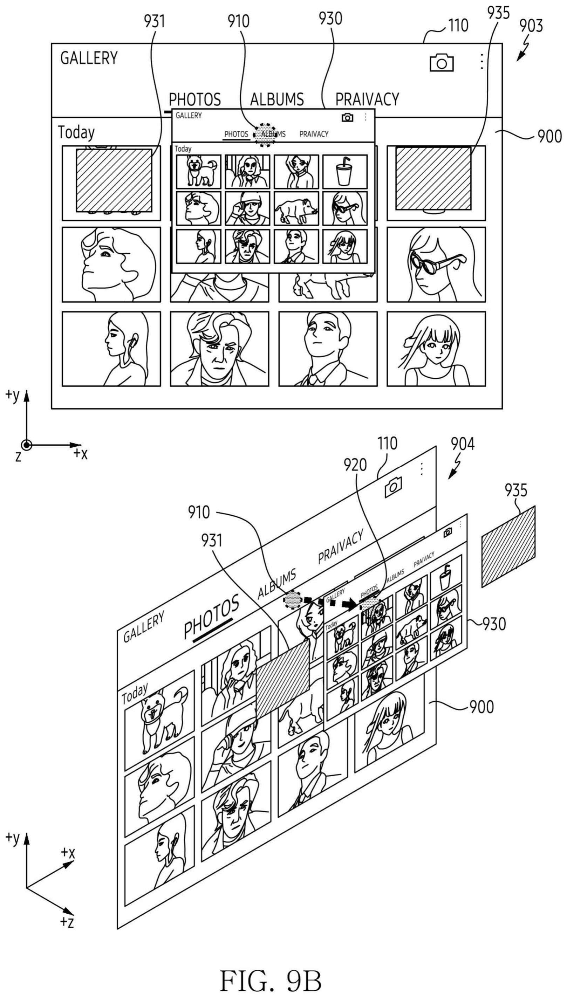

The processor 320 may process the user input 910. For example, the processor 320 may select the screen 900 in response to the user input 910 for selecting the screen 900. As the user 120 selects the screen 900, additional input for the screen 900 may be possible. For example, input for moving the selected screen 900 may be possible. A portion of operations associated with the input for moving the selected screen 900 may be exemplified through FIG. 9B.

FIG. 9B illustrates an example of display of an executable object according to user input for an object.

Referring to FIG. 9B, a screen 900 of a gallery application may be displayed on a display 110. An image 903 may be an image depicting the screen 900 displayed by the display 110 from a front side, and an image 904 may be an image depicting the screen 900 displayed by the display 110 from an oblique angle. When a user 120 views the display 110 from the front side, the image 904 is a representation, in three dimensions, of the screen 900 indicated by the display 110 recognized by the user 120. When the user 120 views the display 110 from the oblique angle, the image 904 is not a representation of the screen 900 indicated by the display 110 recognized by the user 120.

A processor 320 may display a thumbnail image 930 indicating the screen 900 in response to user input 910. The processor 320 may display the thumbnail image 930 indicating the screen 900 in response to another input continued from the user input 910.

The processor 320 may obtain user input 920. For example, the user input 920 may be input for moving an object. For example, the user input 920 may be input for moving the thumbnail image 930 indicating the screen 900. For example, the user input 920 may be input continued from the user input 910. For example, the user input 920 may be inputted while the user input 910 is maintained. For example, the user input 920 may be inputted while the user input 910 for selecting the screen 900 is maintained. For example, the user input 920 may be scroll input, drag input, or gesture input. For example, the user input 405 may be a gaze of the user obtained through a sensor 330 or a camera (e.g., a camera module 1580 of FIG. 15).

The processor 320 may process the user input 920. For example, the processor 320 may move the thumbnail image 930 in response to the user input 920 for moving the thumbnail image 930.

The processor 320 may change display of the thumbnail image 930 in response to the user input 920. For example, in response to the user input 920 being movement for moving the thumbnail image 930 in a Z-axis direction, the processor 320 may display the thumbnail image 930 with a depth value different from the screen 900.

The processor 320 may display at least one executable object 931 and/or 935 on the display 110 in response to the user input 920. The processor 320 may display the at least one executable object 931 and/or 935 on the display 110 in response to input for moving the thumbnail image 930. For example, the processor 320 may display the at least one executable object 931 and/or 935 on the display 110 in response to input for moving the thumbnail image 930 by a designated distance or more in the Z-axis direction. For example, the at least one executable object 931 and/or 935 may be a visual object. For example, the at least one executable object 931 and/or 935 may be text or an image. For example, the image may be a photo, or an icon. For example, the at least one executable object 931 and/or 935 may be an object for a function supported for the screen 900 or the thumbnail image 930 of the screen 900. For example, the at least one executable object 931 and/or 935 may be an object for an executable function associated with the screen 900 or the thumbnail image 930 of the screen 900. The at least one executable object 931 and/or 935 may be an object for executing a function associated with search, translation, sharing, screenshot, pop-up, split screen, clip, storage, or editing. Different functions may be mapped to the at least one executable object 931 and/or 935. For example, a split function may be mapped to the executable object 931, and a storage function may be mapped to the executable object 935.

The processor 320 may display the at least one executable object 931 and/or 935 at a position spaced apart from a depth (e.g., Z₀) of the screen 900 by a reference depth. For example, the processor 320 may display the at least one executable object 931 and/or 935 on the display 110 so that the at least one executable object 931 and/or 935 is recognized by the user 120 as being displayed at the position spaced apart by the reference depth. However, it is not limited thereto.

In response to the user input 920 being input for moving the thumbnail image 930 in the Z-axis direction (a +Z-axis direction or a -Z-axis direction) to which the display 110 is directed, the processor 320 may display the at least one executable object 931 and/or 935 on the display 110. For example, in response to the user input 920 being input for moving the thumbnail image 930 in the Z-axis direction by a preset distance, the processor 320 may display the at least one executable object 931 and/or 935 on the display 110. In response to a displacement in the Z-axis direction among displacements of each of axis directions of the thumbnail image 930 corresponding to the preset distance by the user input 920, the processor 320 may display the at least one executable object 931 and/or 935 on the display 110.

The processor 320 may obtain user input. The processor 320 may receive user input. For example, the processor 320 may obtain user input for selecting the executable object 935. For example, the user input may be obtained through a digital pen or a user (or a part (e.g., a hand) of a body of the user). However, it is not limited thereto.

For example, the processor 320 may execute a function associated with the executable object 931. For example, the processor 320 may execute the function associated with the executable object 931 for the screen 900 or the thumbnail image 930. For example, the processor 320 may execute the function associated with the executable object 931. For example, the processor 320 may execute the function associated with the executable object 931 for the screen 900 or the thumbnail image 930 selected by the user input 910. For example, the processor 320 may execute the function associated with the executable object 931 in response to the user input. For example, the processor 320 may execute the function associated with the executable object 931 in response to the user input for selecting the executable object 931. For example, the function associated with the executable object 931 may be a screenshot function. For example, the function associated with the executable object 931 may be a screenshot of the screen 900 of the thumbnail image 930 selected by the user input 910.

The processor 320 may provide an execution result of the function associated with the executable object 931. The processor 320 may provide the user 120 with the execution result of the function associated with the executable object 931. For example, in a case that the function associated with the executable object 931 is the screenshot function, the processor 320 may save a screenshot image of the screen 900 selected by the user input 910 in memory 350.

An operation of FIG. 9B is not limited to the gallery application. For example, the screenshot function may be applied to various applications.

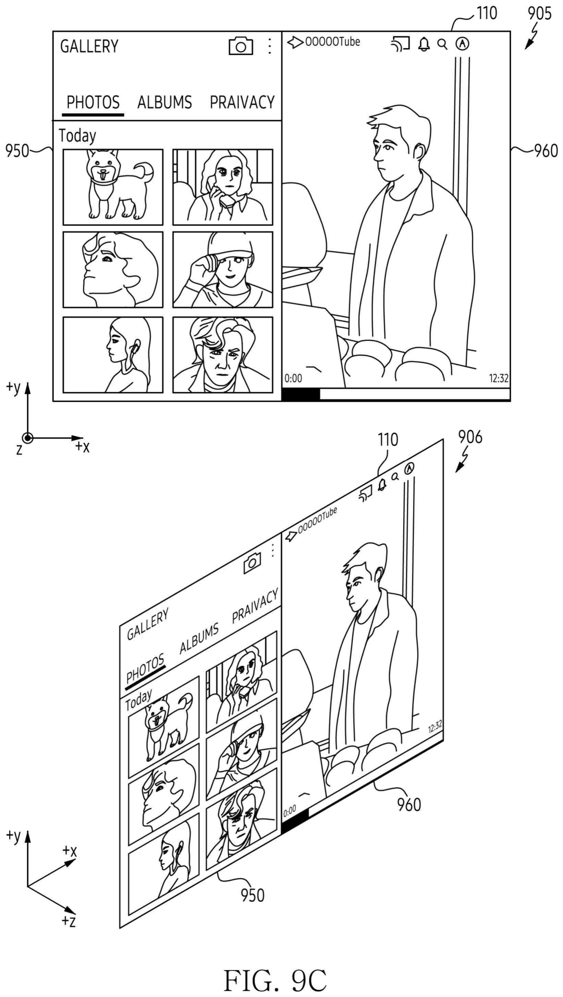

FIG. 9C illustrates an example of an execution result of a function associated with an executable object.

Referring to FIG. 9C, a screen 950 of a gallery application and a screen 960 of a multimedia application may be displayed on a display 110. An image 901 may be an image depicting the screens 950 and 960 displayed by the display 110 from a front side, and an image 902 may be an image depicting the screens 950 and 960 displayed by the display 110 from an oblique angle. When a user 120 views the display 110 from the front side, the image 902 is a representation, in three dimensions, of the screens 950 and 960 indicated by the display 110 recognized by the user 120. When the user 120 views the display 110 from the oblique angle, the image 902 is not a representation of the screen 950 and 960 indicated by the display 110 recognized by the user 120.

A processor 320 may obtain user input. The processor 320 may receive user input. For example, the processor 320 may obtain user input for selecting an executable object 935. For example, the user input may be obtained through a digital pen or a user (or a part (e.g., a hand) of a body of the user). However, it is not limited thereto. For example, the user input 405 may be a gaze of the user obtained through a sensor 330 or a camera (e.g., a camera module 1580 of FIG. 15).

For example, the processor 320 may execute a function associated with the executable object 935. For example, the processor 320 may execute the function associated with the executable object 935 for the screen 900 or a thumbnail image 930. For example, the processor 320 may execute the function associated with the executable object 935. For example, the processor 320 may execute the function associated with the executable object 935 for the screen 900 or the thumbnail image 930 selected by user input 910. For example, the processor 320 may execute the function associated with the executable object 935 in response to the user input. For example, the processor 320 may execute the function associated with the executable object 935 in response to the user input for selecting the executable object 935. For example, the function associated with the executable object 935 may be a split screen function. For example, the function associated with the executable object 931 may be a split screen of the screen 900 selected by the user input 910. However, it is not limited thereto.

The processor 320 may provide an execution result of the function associated with the executable object 935. The processor 320 may provide the user 120 with the execution result of the function associated with the executable object 935. The processor 320 may display the execution result of the function associated with the executable object 935 through the display 110. For example, in a case that the function associated with the executable object 935 is the split screen function, the processor 320 may display the screen 900 selected by the user input 910 as a split screen on the display 110.

For example, in a case that the screen 900 selected by the user input 910 is displayed as the split screen, the other screen 960 may be displayed on the display 110. For example, the other screen 960 may be a screen of an application different from an application of the selected screen 900. For example, the other screen 960 may be a screen of an application selected by the user 120. For example, the processor 320 may be configured so that a region of the screen 900 and a region of the other screen 960 displayed on the display 110 may not overlap each other. However, it is not limited thereto. For example, the processor 320 may be configured so that the other screen 960 may be displayed as a pop-up screen on the region of the screen 900.

An operation of FIG. 9C is not limited to the gallery application. For example, the split screen function may be applied to various applications.

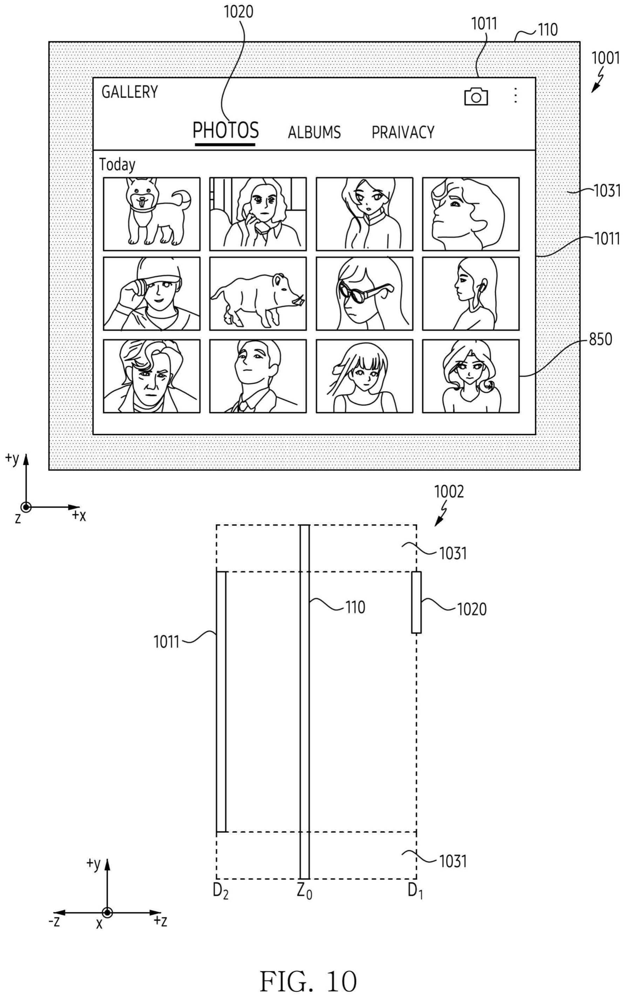

FIG. 10 illustrates an example of a storage region displayed according to movement of a screen.

Referring to FIG. 10A, a screen 1011 and a storage region 1031 of a gallery application may be displayed on a display 110. An image 1001 may be an image depicting the screen 1011 and the storage region 1031 displayed by the display 110 from a front side, and an image 1002 may be an image depicting the screen 1011 and the storage region 1031 displayed by the display 110 from an oblique angle. When a user 120 views the display 110 from the front side, the image 1002 is an indication, from the oblique angle, of the screen 1011 and the storage region 1031 of the display 110 recognized by the user 120.

A processor 320 may obtain user input. For example, the user input may be input for selecting an object 1020. For example, the processor 320 may recognize a case that a button operation (e.g., click or push) of a digital pen is applied while the digital pen points to the object 1020 as input for selecting the object 1020. For example, the processor 320 may recognize a case that a designated gesture (e.g., grasp input) of the user is applied while the user (or a part (e.g., a hand) of a body of the user) points to the object 1020 as input for selecting the object 1020. For example, the user input 405 may be a gaze of the user obtained through a sensor 330 or a camera (e.g., a camera module 1580 of FIG. 15).

For example, the user input may be input for moving the object 1020. For example, the user input may be input for moving the selected object 1020. For example, the processor 320 may recognize a case that a position of the digital pen is moved while the button operation (e.g., click or push) of the digital pen is maintained as the input for moving the object 1020. For example, the processor 320 may recognize a case that a motion of the user is applied while the designated gesture (e.g., the grasp input) of the user is applied as the input for moving the object 1020. However, it is not limited thereto.

The processor 320 may process the user input. For example, the processor 320 may move the object 1020 in response to the user input for moving the object 1020.

The processor 320 may change display of the screen 1011. For example, the processor 320 may change the display of the screen 1011 in response to the user input for moving the object 1020. For example, the processor 320 may change a depth at which the screen 1011 is displayed. For example, in response to the user input for moving the object 1020, the processor 320 may change the depth at which the screen 1011 is displayed. For example, the processor 320 may display the screen 1011 at a position separated from an original depth (e.g., Z₀) of the screen 1011 by a reference depth. For example, the processor 320 may display the screen 1011 on the display 110 so that the screen 1011 is recognized by the user 120 as being displayed at the position separated by the reference depth.

In response to the user input being input for moving the object 1020 in a Z-axis direction (a +Z-axis direction or a -Z-axis direction) to which the display 110 is directed, the processor 320 may display the screen 1011 on the display 110 at the position separated from the original depth (e.g., Z₀) by the reference depth. In response to the user input being input for moving the object 1020 in the Z-axis direction (the +Z-axis direction or the -Z-axis direction) to which the display 110 is directed, the processor 320 may display the screen 1011 at a position separated from the original depth (e.g., Z₀) by the reference depth in the -Z-axis direction.

The processor 320 may display the screen 1011 on the display 110 so that a size of the screen 1011 recognized by the user decreases as the screen 1011 is moved in the -Z-axis direction.

The processor 320 may display the storage region 1031 around the screen 1011. For example, the processor 320 may display a blank region generated by moving the screen 1011 in the -Z-axis direction as the storage region 1131.

The processor 320 may obtain additional user input. For example, the additional user input may be input for moving the object 1020. For example, the additional user input may be input for moving the object 1020 to the storage region 1031. For example, the additional user input may be continued from the input for moving the object 1020. For example, the additional user input may be continued from input for selecting the object 1020.

The processor 320 may provide an execution result of the additional user input for the object 1020. The processor 320 may save the object 1020 in the storage region 1031 in response to the object 1020 being moved to the storage region 1031.

The storage region 1031 of FIG. 10 is not limited to a function of saving an object selected by the user 120. For example, the processor 320 may load the object saved by the user 120 in the storage region 1031. For example, the processor 320 may load the object saved by the user 120 in the storage region 1031 into an application. For example, the processor 320 may display, on a screen of the application, the object saved by the user 120 in the storage region 1031.

The processor 320 may display the storage region 1031 on the display 110. The processor 320 may display the storage region 1031 on the display 110 in response to user input for displaying the storage region 1031.

The processor 320 may obtain additional user input. For example, the additional user input may be input for selecting another object saved in the storage region 1031. For example, the additional user input may be input for moving the other object saved in the storage region 1031.

In response to obtaining the additional user input for the storage region 1031, the processor 320 may load the object moved by the additional user input into an application of the screen 1011. For example, in response to obtaining the additional user input for the storage region 1031, the processor 320 may display the object moved by the additional user input on the screen 1011.

In response to displaying the object moved by the additional user input on the screen 1011, the processor 320 may process the storage region 1031. For example, in response to displaying the object moved by the additional user input on the screen 1011, the processor 320 may display the screen 1011 at the original depth.

The storage region 1031 of FIG. 10 may be set for each user. For example, the processor 320 may authenticate the user 120. For example, the processor 320 may authenticate the user 120 based on user ID. For example, the processor 320 may authenticate the user 120 based on biometric information (e.g., fingerprint, voiceprint, and vein) of the user 120. The processor 320 may display the storage region 1031 of the authenticated user 120 on the display 110.

A representation method of the object loaded from the storage region 1031 of FIG. 10 may be changed for each application. For example, display of an object pasted from the storage region 1031 may be changed based on a characteristic of an application. For example, in a case that the object loaded from the storage region 1031 is not supported by an application, the processor 320 may change the display of the object loaded from the storage region 1031. For example, in a case that the object loaded from the storage region 1031 is not supported by the application, the processor 320 may include the object from the storage region 1031, whose display has been changed, in a screen of the application. For example, in a case that the object loaded from the storage region 1031 is not supported by the application, the processor 320 may paste the object from the storage region 1031, whose display has been changed, into the screen of the application. For example, in a case that the application does not support a 3D object and the object loaded from the storage region 1031 is a 3D object, the processor 320 may change the object loaded from the storage region 1031 to a 2D object (e.g., a 2D graphic or a 3D graphic). For example, in a case that the application does not support the 3D object and the object loaded from the storage region 1031 is the 3D object, the processor 320 may display the object changed from the 3D object loaded from the storage region 1031 to the 2D object on the screen of the application.

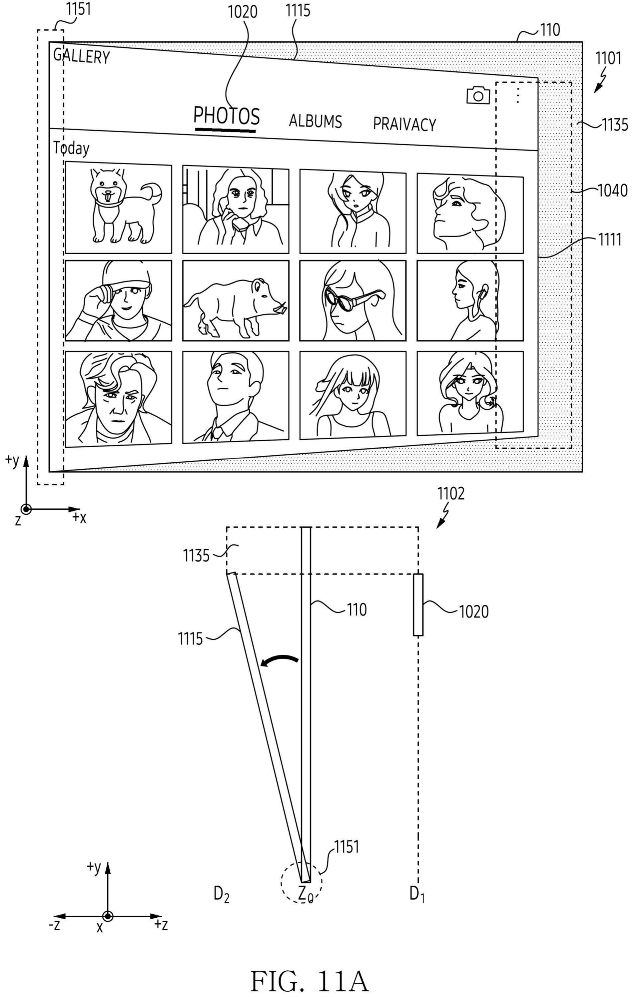

FIG. 11A illustrates an example of a storage region displayed according to movement of a screen.

Referring to FIG. 11A, a screen 1115 of a gallery application may be displayed on a display 110. An image 1101 may be an image depicting the screen 1115 displayed by the display 110 from a front side, and an image 1002 may be an image depicting the screen 1115 displayed by the display 110 from an oblique angle. When a user 120 views the display 110 from the front side, the image 1102 is a representation, in three dimensions, of the screen 1115 displayed by the display 110 recognized by the user 120. When the user 120 views the display 110 from the oblique angle, the image 1002 is not a representation of the screen 1115 indicated by the display 110 recognized by the user 120.

For example, user input may be input for moving an object 1020. For example, the user input may be input for moving the selected object 1020. A processor 320 may process the user input. For example, the processor 320 may move the object 1020 in response to the user input for moving the object 1020.

The processor 320 may change display of the screen 1115. For example, the processor 320 may change the display of the screen 1115 in response to the user input for moving the object 1020. For example, the processor 320 may change a depth at which the screen 1115 is displayed.

For example, the processor 320 may rotate the screen 1115 based on an axis 1151. For example, the processor 320 may rotate the screen 1115 based on the axis 1151 in a -Z-axis direction. For example, the processor 320 may rotate the screen 1115 based on the axis 1151 selected by the user 120 in the -Z-axis direction. For example, the designated axis 1151 may be a side (or an edge) facing a side (or an edge) of the screen 1115 to which a gaze of the user 120 is directed. For example, the processor 320 may determine the axis 1151 based on positions of eyes 121 and 125 of the user 120 detected through a sensor 330. For example, the processor 320 may determine the side (or the edge) facing the side (or the edge) to which the gaze of the user 120 is directed as the axis 1151.

The processor 320 may display the screen 1115 on the display 110 so that a size of the screen 1115 recognized by the user decreases as the screen 1115 rotates in the -Z-axis direction.

The processor 320 may display a storage region 1135 around the screen 1115. For example, the processor 320 may display a blank region generated by rotating the screen 1115 in the -Z-axis direction as the storage region 1135.

The processor 320 may obtain additional user input. For example, the additional user input may be input for moving the object 1020. For example, the additional user input may be input for moving the object 1020 to the storage region 1135. For example, the additional user input may be continued from the input for moving the object 1020. For example, the additional user input may be continued from input for selecting the object 1020.

The processor 320 may provide an execution result of the additional user input for the object 1020. The processor 320 may save the object 1020 in the storage region 1135 in response to the object 1020 being moved to the storage region 1135.

The storage region 1135 of FIG. 11A is not limited to a function of saving an object selected by the user 120. For example, the processor 320 may load the object saved by the user 120 in the storage region 1135. For example, the processor 320 may load the object saved by the user 120 in the storage region 1135 into an application. For example, the processor 320 may display, on a screen of the application, the object saved by the user 120 in the storage region 1135.

The processor 320 may display the storage region 1135 on the display 110. The processor 320 may display the storage region 1135 on the display 110 in response to user input for displaying the storage region 1135.

The processor 320 may obtain additional user input. For example, the additional user input may be input for selecting another object saved in the storage region 1135. For example, the additional user input may be input for moving the other object saved in the storage region 1135.

In response to obtaining the additional user input for the storage region 1135, the processor 320 may load the object moved by the additional user input into an application of the screen 1115. For example, in response to obtaining the additional user input for the storage region 1135, the processor 320 may display the object moved by the additional user input on the screen 1115.

In response to displaying the object moved by the additional user input on the screen 1115, the processor 320 may process the storage region 1135. For example, in response to displaying the object moved by the additional user input on the screen 1115, the processor 320 may display the screen 1115 at an original depth.

The storage region 1135 of FIG. 11A may be set for each user. For example, the processor 320 may authenticate the user 120. For example, the processor 320 may authenticate the user 120 based on user ID. For example, the processor 320 may authenticate the user 120 based on biometric information (e.g., fingerprint, voiceprint, and vein) of the user 120. The processor 320 may display the storage region 1135 of the authenticated user 120 on the display 110.

A representation method of the object loaded from the storage region 1135 of FIG. 11A may be changed for each application. For example, in a case that the object loaded from the storage region 1135 is not supported by an application, the processor 320 may change the display of the object loaded from the storage region 1135. For example, in a case that the object loaded from the storage region 1135 is not supported by the application, the processor 320 may include the object from the storage region 1135, whose display has been changed, in a screen of the application. For example, in a case that the application does not support a 3D object and the object loaded from the storage region 1135 is a 3D object, the processor 320 may change the object loaded from the storage region 1135 to a 2D object (e.g., a 2D graphic or a 3D graphic). For example, in a case that the application does not support the 3D object and the object loaded from the storage region 1135 is the 3D object, the processor 320 may display the object changed from the 3D object loaded from the storage region 1135 to the 2D object on the screen of the application.

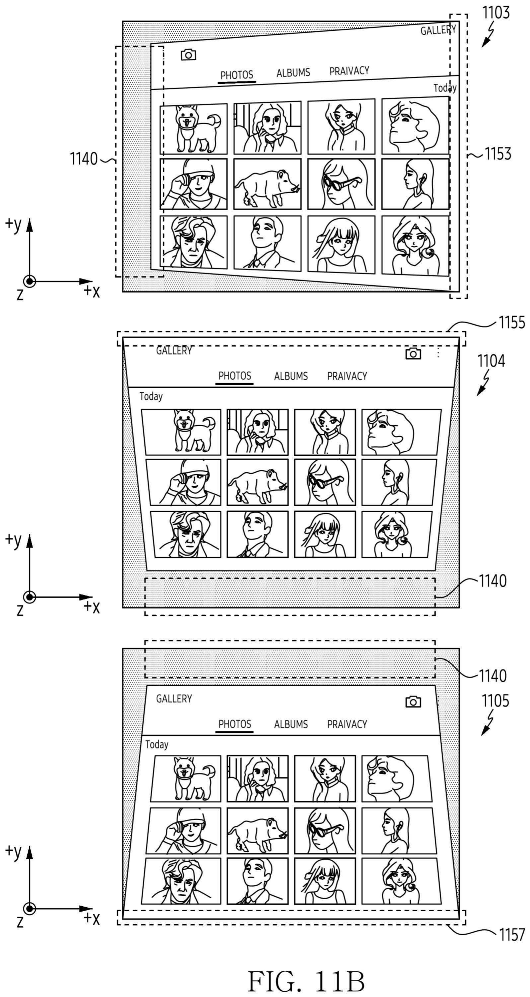

FIG. 11B illustrates an example of a storage region displayed according to movement of a screen.

Referring to FIG. 11B, a screen of a gallery application may be displayed on a display 110. Images 1103, 1104, and 1105 may be images depicting a screen displayed by the display 110 from a front side.

FIG. 11B may have a different axis for rotating a screen compared to FIG. 11A.

For example, referring to the image 1103, a processor 320 may determine an axis 1153 based on positions of eyes 121 and 125 of a user 120 detected through a sensor 330. For example, the processor 320 may determine a side facing a side 1140 to which a gaze of the user 120 is directed as the axis 1153. For example, the processor 320 may rotate a screen in a -Z-axis direction based on the determined axis 1153. The image 1103 may indicate a state in which the screen is rotated in the -Z-axis direction based on the left side 1153 of the screen.

For example, referring to the image 1104, the processor 320 may determine an axis 1155 based on positions of the eyes 121 and 125 of the user 120 detected through the sensor 330. For example, the processor 320 may determine a side facing the side 1140 to which the gaze of the user 120 is directed as the axis 1155. For example, the processor 320 may rotate a screen in the - Z-axis direction based on the determined axis 1155. The image 1104 may indicate a state in which the screen is rotated in the -Z-axis direction based on the upper side 1155 of the screen.

For example, referring to the image 1105, the processor 320 may determine an axis 1157 based on positions of the eyes 121 and 125 of the user 120 detected through the sensor 330. For example, the processor 320 may determine a side facing the side 1140 to which the gaze of the user 120 is directed as the axis 1157. For example, the processor 320 may rotate a screen in the - Z-axis direction based on the determined axis 1157. The image 1104 may indicate a state in which the screen is rotated in the -Z-axis direction based on the lower side 1157 of the screen.

The processor 320 may display a storage region around the screen. For example, the processor 320 may display a blank region generated by rotating the screen in the -Z-axis direction as the storage region.

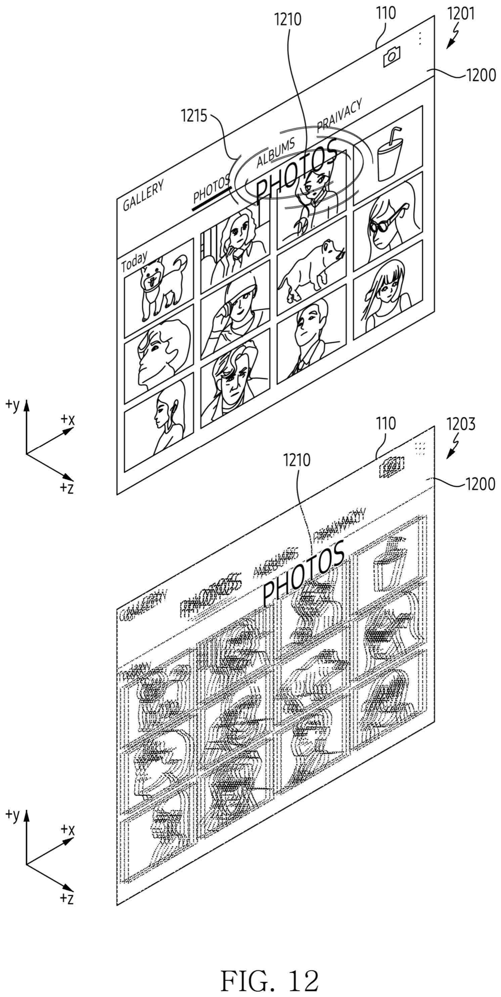

FIG. 12 illustrates an example of a graphic effect applicable according to user input for an object.

Referring to FIG. 12A, a screen 1200 of a gallery application may be displayed on a display 110. An image 1201 and an image 1002 may be images depicting the screen 1200 displayed by the display 120 from an oblique angle. When a user 120 views the display 120 from a front side, the image 1201 and the image 1002 are representations, in three dimensions, of the screen 1200 displayed by the display 120 recognized by the user 120. When the user 120 views the display 120 from the oblique angle, the image 1201 and the image 1002 are not representations of the screen 1200 displayed by the display 120 recognized by the user 120.

A processor 320 may apply at least one graphic effect to the screen 1200 in response to user input 1210. For example, the user input 1210 may be input for selecting an object displayed on the screen 1200. For example, the user input 1210 may be input for moving the object displayed on the screen 1200. For example, the user input 1210 may be input for moving the object displayed on the screen 1200 in a Z-axis direction by a designated distance or more.

For example, in a case that a depth difference between the object and the screen 1200 is greater than or equal to a designated depth difference, the processor 320 may apply at least one graphic effect to the screen 1200. The designated depth difference may be set differently according to a type of an application generating the screen 1200, a type of the screen 1200, a size of the selected object, or a type of the selected object. For example, the designated depth difference may be a depth difference that the user 120 recognizes the screen 1200 and the selected object as being separated from each other. For example, the designated depth difference may be determined experimentally.

For example, a graphic effect may indicate a depth difference between the selected object and the screen 1200. For example, the graphic effect may be a ripple effect or a blur effect. However, it is not limited thereto.

Referring to the image 1201, the processor 320 may apply the ripple effect to the screen 1200 in response to an object being separated from the screen 1200 by a designated distance or more by the user input 1210. For example, the processor 320 may apply the ripple effect to the screen 1200 in response to the object being separated from the screen 1200 by a designated depth distance or more by the user input 1210. For example, the ripple effect may be applied to a position on the screen 1200 where the object existed before the user input 1210. However, it is not limited thereto.

Referring to the image 1203, the processor 320 may apply the blur effect to the screen 1200 in response to an object being separated from the screen 1200 by a designated distance or more by the user input 1210. For example, the processor 320 may apply the blur effect to the screen 1200 in response to the object being separated from the screen 1200 by a designated depth distance or more by the user input 1210. For example, the blur effect may be applied more strongly as the object is farther separated from the screen 1200. However, it is not limited thereto.

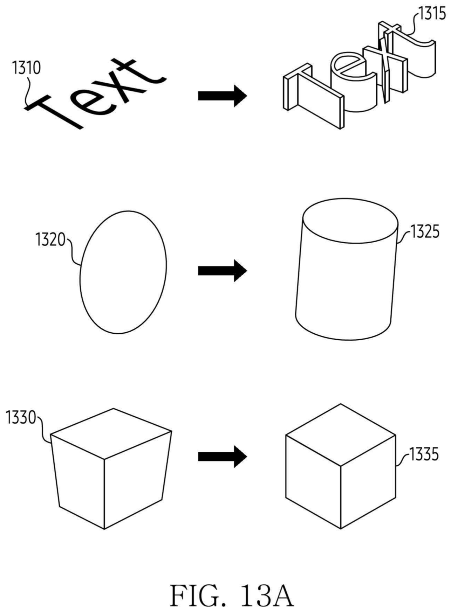

FIG. 13A illustrates an example of a graphic effect applicable to an object.

Referring to FIG. 13A, a processor 320 may apply at least one graphic effect to each of objects 1310, 1320, and 1330 in response to user input. For example, in response to each of the objects 1310, 1320, and 1330 selected by user input being moved in a Z-axis direction from a screen, the processor 320 may apply at least one graphic effect to each of the objects 1310, 1320, and 1330. For example, in response to each of the objects 1310, 1320, and 1330 selected by the user input being moved by a designated distance or more in the Z-axis direction from the screen, the processor 320 may apply at least one graphic effect to each of the objects 1310, 1320, and 1330.

For example, in a case that a depth difference between each of the objects 1310, 1320, and 1330 and the screen is greater than or equal to a designated depth difference, the processor 320 may apply at least one graphic effect to each of the objects 1310, 1320, and 1330. The designated depth difference may be set differently according to a type of an application generating the screen, a type of the screen, a size of the selected object, or a type of the selected object.

For example, a graphic effect may indicate the depth difference between each of the selected objects 1310, 1320, and 1330 and the screen.

For example, in response to being moved by the designated distance or more in the Z-axis direction by user input, the text object 1310 may be represented on a display 110 as a text object 1315 enlarged in the Z-axis direction. For example, a degree to which the text object 1310 is enlarged in the Z-axis direction may be based on a distance at which the text object 1310 is moved in the Z-axis direction by the user input. For example, in response to being moved by the designated distance or more in the Z-axis direction by the user input, the text object 1310 may be represented on the display 110 as the text object 1315 enlarged in the Z-axis direction. For example, the degree to which the text object 1310 is enlarged in the Z-axis direction may be based on the distance at which the text object 1310 is moved in the Z-axis direction by the user input.

For example, in response to being moved by the designated distance or more in the Z-axis direction by user input, the image object 1320 (e.g., an icon or a thumbnail) may be represented on the display 110 as an image object 1325 enlarged in the Z-axis direction. For example, a degree to which the image object 1320 is enlarged in the Z-axis direction may be based on a distance at which the image object 1320 is moved in the Z-axis direction by the user input. For example, in response to being moved by the designated distance or more in the Z-axis direction by the user input, the image object 1320 may be represented on the display 110 as the image object 1325 enlarged in the Z-axis direction. For example, the degree to which the image object 1320 is enlarged in the Z-axis direction may be based on the distance at which the image object 1320 is moved in the Z-axis direction by the user input. For example, the image object 1320 enlarged in the Z-axis direction may be a 2D graphic object or a 3D graphic object. A 2D graphic object or a 3D graphic object before being enlarged in the Z-axis direction may not have a thickness in a depth direction. The 2D graphic object or the 3D graphic object before being enlarged in the Z-axis direction may have a thickness of 0 in the depth direction. However, it is not limited thereto.

For example, in response to the three-dimensional object 1330 being moved by the designated distance or more in the Z-axis direction by user input, a view from which the three-dimensional object 1330 is viewed may vary. For example, in response to being moved by the designated distance or more in the Z-axis direction by the user input, the three-dimensional object 1330 represented in a first view may be represented on the display 110 as a three-dimensional object 1335 represented in a second view. For example, the first view may be a perspective view. For example, the second view may be an orthographic view. However, it is not limited thereto.

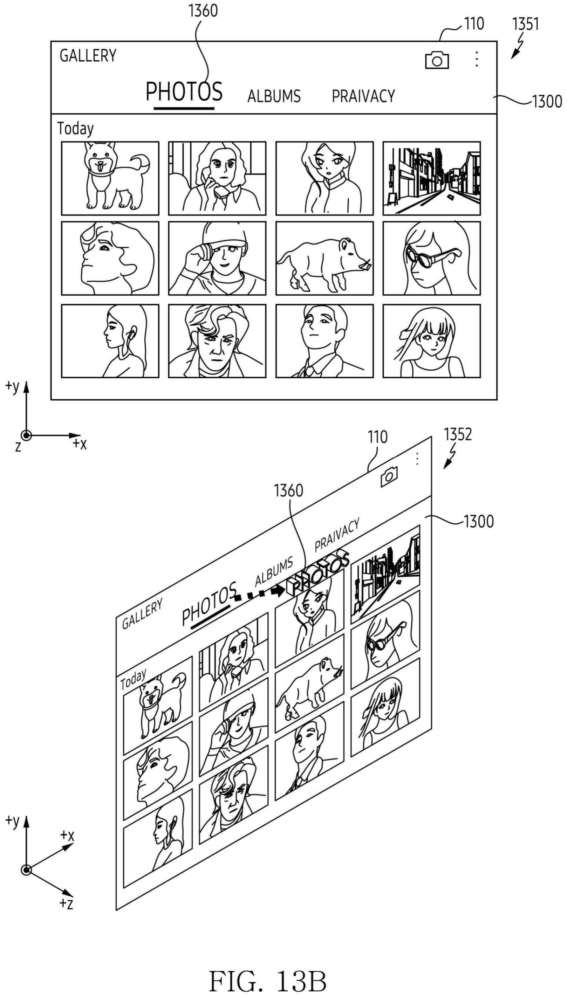

FIG. 13B illustrates an example of a graphic effect applied to an object.

Referring to FIG. 13A, a screen 1300 of a gallery application may be displayed on a display 110. An image 1351 may be an image depicting a screen displayed by the display 110 from a front side, and an image 1352 may be an image depicting the screen 1300 displayed by the display 110 from an oblique angle. When a user 120 views the display 110 from the front side, the image 1352 is a representation, in three dimensions, of the screen 1300 indicated by the display 110 recognized by the user 120. When the user 120 views the display 110 from the oblique angle, the image 1352 is not a representation of the screen 1300 indicated by the display 110 recognized by the user 120.

A processor 320 may apply at least one graphic effect to an object 1360 in response to user input for moving the object 1360 in a Z-axis direction. For example, in a case that a depth difference between the object 1360 and the screen 1300 is greater than or equal to a designated depth difference, the processor 320 may apply at least one graphic effect to the object 1360.

For example, in response to being moved by a designated distance or more in the Z-axis direction by user input, the processor 320 may display the text object 1360 on the display 110 as the text object 1360 enlarged in the Z-axis direction. For example, the processor 320 may enlarge the text object 1360 in the Z-axis direction based on a distance at which a text object 1310 is moved in the Z-axis direction by the user input.

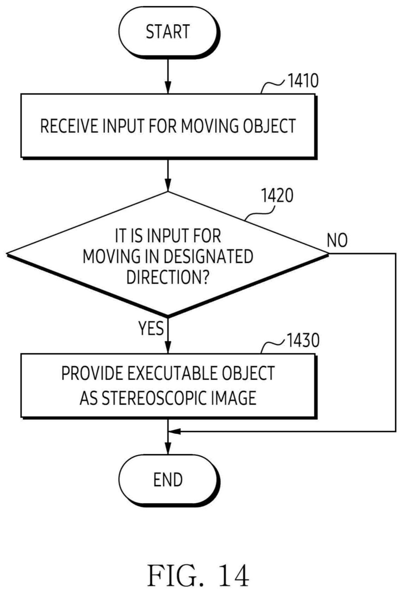

FIG. 14 is a flowchart of an exemplary method.

Referring to FIG. 14, in operation 1410, a processor 320 may receive input for moving an object.

For example, the processor 320 may obtain the input for moving the object through an input module 340. For example, the processor 320 may obtain the input for moving the object including an operation of a digital pen. For example, the processor 320 may obtain the input for moving the object including a motion of a user 120. For example, the input for moving the object may include input for selecting the object.

The object may be an object displayed on a display 110. The object may be included in a screen displayed on the display 110. For example, the screen may be a 2D screen. For example, the object may be a 2D object. However, it is not limited thereto. For example, the screen may be a 3D screen. For example, the object may be a 3D object.

In operation 1420, the processor 320 may determine (or identify, calculate, or decide) whether it is input for moving in a designated direction.

The processor 320 may determine whether it is input for moving the object in a first direction (a +Z-axis direction) to which the display 110 is directed or a second direction (a -Z-axis direction) opposite to the first direction. For example, the processor 320 may determine whether it is input for moving the object in the +Z axis direction or the -Z axis direction by a preset distance. For example, the processor 320 may determine whether a displacement in a Z-axis direction among displacements of each of axis directions of the object corresponds to the preset distance by the input for moving the object.

In response to determining (or identifying, calculating, or deciding) that it is the input for moving in the designated direction, the processor 320 may perform operation 1430. In response to determining (or identifying, calculating, or deciding) that it is not the input for moving in the designated direction, the processor 320 may not perform the operation 1430.

In the operation 1430, the processor 320 may provide an executable object as a spatial image. The processor 320 may display at least one executable object at a position separated from a depth of the screen by a reference depth. For example, the processor 320 may display at least one executable object on the display 110 so that the at least one executable object is recognized by the user 120 as being displayed at the position separated from the screen by the reference depth.

FIG. 15 is a block diagram illustrating an electronic device 1501 in a network environment 1500 according to various embodiments.

Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, an HDMI connector, a USB connector, an SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

An electronic device 101 as described above may comprise a display 110 capable of providing a stereoscopic image to a user. The electronic device 101 as described above may comprise a processor 320. According to an embodiment, the processor 320 may be configured to display, on the display 110, an object 410, 1020, 1310, 1320, 1330, or 1360. According to an embodiment, the processor 320 may be configured to receive first input 401, 620, 820, 920, or 1210 to move the object 410, 1020, 1310, 1320, 1330, or 1360. According to an embodiment, the processor 320 may be configured to, in response to that the object 410, 1020, 1310, 1320, 1330, or 1360 moves along a vertical direction perpendicular to a side of the display 110 by the first input 401, 620, 820, 920, or 1210, display, on the display 110, an executable object 421, 425, 431, 435, 441, 445, 451, 455, 631, 635, 831, 835, 931, or 935 for a function executable associated with the object 410, 1020, 1310, 1320, 1330, or 1360 as the stereoscopic image. According to an embodiment, the processor 320 may be configured to execute the function in response to second input 405 to link the object 410, 1020, 1310, 1320, 1330, or 1360 to the executable object 421, 425, 431, 435, 441, 445, 451, 455, 631, 635, 831, 835, 931, or 935.

According to an embodiment, the processor 320 may be configured to, in response to that the object 410, 1020, 1310, 1320, 1330, or 1360 moves within a first reference distance range along the vertical direction by the first input 401, 620, 820, 920, or 1210, display, on the display 110, an executable first object for a first function executable associated with the object 410, 1020, 1310, 1320, 1330, or 1360 as the stereoscopic image. According to an embodiment, the processor 320 may be configured to, in response to that the object 410, 1020, 1310, 1320, 1330, or 1360 moves within a second reference distance range, which is not overlapped with the first reference distance range, along the vertical direction by the first input 401, 620, 820, 920, or 1210, display, on the display 110, a second executable object for a second function executable associated with the object 410, 1020, 1310, 1320, 1330, or 1360 as the stereoscopic image.

According to an embodiment, the processor 320 may be configured to, in response to that the object 410, 1020, 1310, 1320, 1330, or 1360 moves more than a reference distance along the vertical direction by the first input 401, 620, 820, 920, or 1210, identify the executable object 421, 425, 431, 435, 441, 445, 451, 455, 631, 635, 831, 835, 931, or 935 corresponding to a region in which the object 410, 1020, 1310, 1320, 1330, or 1360 is located among a plurality of executable objects. According to an embodiment, the processor 320 may be configured to display, on the display 110, the identified executable object 421, 425, 431, 435, 441, 445, 451, 455, 631, 635, 831, 835, 931, or 935 as the stereoscopic image.

According to an embodiment, the processor 320 may be configured to, in a case that the object 410, 1020, 1310, 1320, 1330, or 1360 moves more than a reference distance along the vertical direction by the first input 401, 620, 820, 920, or 1210, identify the executable object 421, 425, 431, 435, 441, 445, 451, 455, 631, 635, 831, 835, 931, or 935 corresponding to a characteristic of movement of the first input 401, 620, 820, 920, or 1210 among a plurality of executable objects. According to an embodiment, the processor 320 may be configured to display, on the display 110, the identified executable object 421, 425, 431, 435, 441, 445, 451, 455, 631, 635, 831, 835, 931, or 935 as the stereoscopic image.

According to an embodiment, the characteristic of the movement may be configured to include at least one of trajectory of the movement, velocity of the movement, or acceleration of the movement.

According to an embodiment, the processor 320 may be configured to, during the object 410, 1020, 1310, 1320, 1330, or 1360 being displayed on the display 110 as a monoscopic image, identify the first input 401, 620, 820, 920, or 1210 to move the object 410, 1020, 1310, 1320, 1330, or 1360.

According to an embodiment, the processor 320 may be configured to, in response to that the object 410, 1020, 1310, 1320, 1330, or 1360 moves along the vertical direction by the first input 401, 620, 820, 920, or 1210, display, on the display 110, the object 410, 1020, 1310, 1320, 1330, or 1360 as the stereoscopic image.

According to an embodiment, the processor 320 may be configured to, in response to that the object 410, 1020, 1310, 1320, 1330, or 1360 moves more than a reference distance along the vertical direction by the first input 401, 620, 820, 920, or 1210, display, on the display 110, the stereoscopic image in order to represent a screen 1011 or 1115, which includes the object 410, 1020, 1310, 1320, 1330, or 1360 before the first input 401, 620, 820, 920, or 1210 is input, as moved along the vertical direction.

According to an embodiment, the processor 320 may be configured to identify an edge among one or more edges 1151, 1153, 1155, and 1157 of the screen 1115 as a reference axis. According to an embodiment, the processor 320 may be configured to display, on the display 110, the stereoscopic image in order to represent the screen 1115 rotated along the vertical direction based on the reference axis.

According to an embodiment, the electronic device 101 may comprise a sensor 330 to detect positions of eyes of a user. According to an embodiment, the processor 320 may be configured to identify a gaze of the user based on the positions of the eyes obtained based on the sensor 330. According to an embodiment, the processor 320 may be configured to identify an edge 1151, 1153, 1155, or 1157 facing an edge 1140 at which the gaze of the user is located as the reference axis.

According to an embodiment, the processor 320 may be configured to, in response to that the object 410, 1020, 1310, 1320, 1330, or 1360 moves more than a reference distance along the vertical direction by the first input 401, 620, 820, 920, or 1210, display, on the display 110, the stereoscopic image that enlarges the object 410, 1020, 1310, 1320, 1330, or 1360 along the vertical direction.

According to an embodiment, the processor 320 may be configured to, in response to that the object 410, 1020, 1310, 1320, 1330, or 1360 moves more than a reference distance along the vertical direction by the first input 401, 620, 820, 920, or 1210, display, on the display 110, the stereoscopic image to represent view of the object 410, 1020, 1310, 1320, 1330, or 1360 as orthographic view.

According to an embodiment, the electronic device 101 may further comprise a sensor 330 obtaining information for detecting a position of the user. According to an embodiment, the processor 320 may be configured to generate a left eye image and a right eye image for displaying the stereoscopic image. According to an embodiment, the processor 320 may be configured to, based on the information, display, on the display 110, the left eye image for the left eye image to reach the user's left eye and be blocked to reach the user's right eye. According to an embodiment, the processor 320 may be configured to, based on the information, display, on the display 110, the right eye image for the right eye image to reach the user's right eye and be blocked to reach the user's left eye.

According to an embodiment, the processor 320 may be configured to, in response to that the object 410, 1020, 1310, 1320, 1330, or 1360 moves along the vertical direction by the first input 401, 620, 820, 920, or 1210, identify the executable object 421, 425, 431, 435, 441, 445, 451, 455, 631, 635, 831, 835, 931, or 935 for an executable function according to a type of the object 410, 1020, 1310, 1320, 1330, or 1360. According to an embodiment, the processor 320 may be configured to display, on the display 110, the identified executable object 421, 425, 431, 435, 441, 445, 451, 455, 631, 635, 831, 835, 931, or 935 as the stereoscopic image.

According to an embodiment, the processor 320 may be configured to identify that the object 410, 1020, 1310, 1320, 1330, or 1360 is located within a designated distance from the executable object 421, 425, 431, 435, 441, 445, 451, 455, 631, 635, 831, 835, 931, or 935 by the second input 405 which is continued from the first input 401, 620, 820, 920, or 1210. According to an embodiment, the processor 320 may be configured to, in response to identifying that the object 410, 1020, 1310, 1320, 1330, or 1360 is located within the designated distance from the executable object 421, 425, 431, 435, 441, 445, 451, 455, 631, 635, 831, 835, 931, or 935, execute the function.

According to an embodiment, the processor 320 may be configured to obtain an execution result of the function, in response to the second input. According to an embodiment, the processor 320 may be configured to display, on the display 110, a screen 700 indicating the execution result of the function.

According to an embodiment, the processor 320 may be configured to, in response to the second input, transmit data associated with the object 410, 1020, 1310, 1320, 1330, or 1360 to a target selected by the second input.

According to an embodiment, the processor 320 may be configured to, in response to the second input, display a screen 950 including the object 410, 1020, 1310, 1320, 1330, or 1360 before the first input 401, 620, 820, 920, or 1210 is received on a first region of the display 110, and display another screen 960 different from the screen 950 on a second region of the display 110.

According to an embodiment, the first region may not overlap with the second region.

According to an embodiment, the processor 320 may be configured to, in response to the second input, while the object 410, 1020, 1310, 1320, 1330, or 1360 is displayed as the stereoscopic image, display, on the display 110, the another screen different from a screen on which the object 410, 1020, 1310, 1320, 1330, or 1360 is displayed before the first input 401, 620, 820, 920, or 1210 is received. According to an embodiment, the processor 320 may be configured to, based on a characteristic of an application for displaying the another screen, paste the object 410, 1020, 1310, 1320, 1330, or 1360 in a three-dimensional object or a two-dimensional object.

A method as described above may be executed in an electronic device 101 including a display 110 and a processor 320. The method may comprise displaying, on the display 110, an object 410, 1020, 1310, 1320, 1330, or 1360. The method may comprise displaying, on the display 110, the object 410, 1020, 1310, 1320, 1330, or 1360. The method may comprise receiving first input 401, 620, 820, 920, or 1210 to move the object 410, 1020, 1310, 1320, 1330, or 1360. The method may comprise, in response to that the object 410, 1020, 1310, 1320, 1330, or 1360 moves along a vertical direction perpendicular to a side of the display 110 by the first input 401, 620, 820, 920, or 1210, displaying, on the display 110, an executable object 421, 425, 431, 435, 441, 445, 451, 455, 631, 635, 831, 835, 931, or 935 for a function executable associated with the object 410, 1020, 1310, 1320, 1330, or 1360 as the stereoscopic image. The method may comprise executing the function in response to second input 405 to link the object 410, 1020, 1310, 1320, 1330, or 1360 to the executable object 421, 425, 431, 435, 441, 445, 451, 455, 631, 635, 831, 835, 931, or 935.

A non-transitory computer-readable storage medium as described above may store one or more programs 361, 362, 363, 364, 365, and 366. The one or more programs 361, 362, 363, 364, 365, and 366 may include instructions that, when executed by a processor 320 of an electronic device 101 including a display 110, cause the electronic device 101 to display, on the display 110, an object 410, 1020, 1310, 1320, 1330, or 1360. The one or more programs 361, 362, 363, 364, 365, and 366 may include instructions that, when executed by the processor 320 of the electronic device 101 including the display 110, cause the electronic device 101 to receive first input 401, 620, 820, 920, or 1210 to move the object 410, 1020, 1310, 1320, 1330, or 1360. The one or more programs 361, 362, 363, 364, 365, and 366 may include instructions that, when executed by the processor 320 of the electronic device 101 including the display 110, cause the electronic device 101 to, in response to that the object 410, 1020, 1310, 1320, 1330, or 1360 moves along a vertical direction parallel to a first direction in which the display 110 faces by the first input 401, 620, 820, 920, or 1210, display, on the display 110, an executable object 421, 425, 431, 435, 441, 445, 451, 455, 631, 635, 831, 835, 931, or 935 for a function executable associated with the object 410, 1020, 1310, 1320, 1330, or 1360 as the stereoscopic image. The one or more programs 361, 362, 363, 364, 365, and 366 may include instructions that, when executed by the processor 320 of the electronic device 101 including the display 110, cause the electronic device 101 to execute the function in response to second input 405 to link the object 410, 1020, 1310, 1320, 1330, or 1360 to the executable object 421, 425, 431, 435, 441, 445, 451, 455, 631, 635, 831, 835, 931, or 935.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semipermanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (110) capable of providing a stereoscopic image to a user; and
a processor, wherein the processor is configured to:
display, on the display (110), an object (410, 1020, 1310, 1320, 1330, 1360),
receive first input (401, 620, 820, 920, 1210) to move the object (410, 1020, 1310, 1320, 1330, 1360),
in response to that the object (410, 1020, 1310, 1320, 1330, 1360) moves along a vertical direction perpendicular to a side of the display (110) by the first input (401, 620, 820, 920, 1210), display, on the display (110), an executable object (421, 425, 431, 435, 441, 445, 461, 455, 631, 635, 831, 835, 931, 935) for a function executable associated with the object (410, 1020, 1310, 1320, 1330, 1360) as the stereoscopic image, and
execute the function in response to second input to link the object (410, 1020, 1310, 1320, 1330, 1360) to the executable object (421, 425, 431, 435, 441, 445, 461, 455, 631, 635, 831, 835, 931, 935).

2. The electronic device (101) of claim 1,
wherein the processor is configured to:
in response to that the object (410, 1020, 1310, 1320, 1330, 1360) moves within a first reference distance range along the vertical direction by the first input (401, 620, 820, 920, 1210), display, on the display (110), an executable first object (410, 1020, 1310, 1320, 1330, 1360) for a first function executable associated with the object (410, 1020, 1310, 1320, 1330, 1360) as the stereoscopic image, and
in response to that the object (410, 1020, 1310, 1320, 1330, 1360) moves within a second reference distance range, which is not overlapped with the first reference distance range, along the vertical direction by the first input (401, 620, 820, 920, 1210), display, on the display (110), a second executable object (421, 425, 431, 435, 441, 445, 461, 455, 631, 635, 831, 835, 931, 935) for a second function executable associated with the object (410, 1020, 1310, 1320, 1330, 1360) as the stereoscopic image.

3. The electronic device (101) of claim 1 or claim 2,
wherein the processor is configured to:
in response to that the object (410, 1020, 1310, 1320, 1330, 1360) moves more than a reference distance along the vertical direction by the first input (401, 620, 820, 920, 1210), identify the executable object (421, 425, 431, 435, 441, 445, 461, 455, 631, 635, 831, 835, 931, 935) corresponding to a region in which the object (410, 1020, 1310, 1320, 1330, 1360) is located among a plurality of executable object (421, 425, 431, 435, 441, 445, 461, 455, 631, 635, 831, 835, 931, 935)s, and
display, on the display (110), the identified executable object (421, 425, 431, 435, 441, 445, 461, 455, 631, 635, 831, 835, 931, 935) as the stereoscopic image.

4. The electronic device (101) of any one of claim 1 to claim 3,
wherein the processor is configured to:
in a case that the object (410, 1020, 1310, 1320, 1330, 1360) moves more than a reference distance along the vertical direction by the first input (401, 620, 820, 920, 1210), identify the executable object (421, 425, 431, 435, 441, 445, 461, 455, 631, 635, 831, 835, 931, 935) corresponding to a characteristic of movement of the first input (401, 620, 820, 920, 1210) among a plurality of executable object (421, 425, 431, 435, 441, 445, 461, 455, 631, 635, 831, 835, 931, 935)s, and
display, on the display (110), the identified executable object (421, 425, 431, 435, 441, 445, 461, 455, 631, 635, 831, 835, 931, 935) as the stereoscopic image.

5. The electronic device (101) of any one of claim 1 to claim 4,
wherein the characteristic of the movement includes at least one of trajectory of the movement, velocity of the movement, or acceleration of the movement.

6. The electronic device (101) of any one of claim 1 to claim 5,
wherein the processor is configured to:
during the object (410, 1020, 1310, 1320, 1330, 1360) being display (110)ed on the display (110) as a monoscopic image, identify the first input (401, 620, 820, 920, 1210) to move the object (410, 1020, 1310, 1320, 1330, 1360).

7. The electronic device (101) of any one of claim 1 to claim 6,
wherein the processor is configured to:
in response to that the object (410, 1020, 1310, 1320, 1330, 1360) moves along the vertical direction by the first input (401, 620, 820, 920, 1210), display, on the display (110), the object (410, 1020, 1310, 1320, 1330, 1360) as the stereoscopic image.

8. The electronic device (101) of any one of claim 1 to claim 7,
wherein the processor is configured to:
in response to that the object (410, 1020, 1310, 1320, 1330, 1360) moves more than a reference distance along the vertical direction by the first input (401, 620, 820, 920, 1210), display, on the display (110), the stereoscopic image in order to represent a screen (1115), which includes the object (410, 1020, 1310, 1320, 1330, 1360) before the first input (401, 620, 820, 920, 1210) is input, as moved along the vertical direction.

9. The electronic device (101) of any one of claim 1 to claim 8,
wherein the processor is configured to:
identify an edge among one or more edges (1151, 1153, 1155, 1157) of the screen (1115) as a reference axis, and
display, on the display (110), the stereoscopic image in order to represent the screen (1115) rotated along the vertical direction based on the reference axis.

10. The electronic device (101) of any one of claim 1 to claim 9, further comprising:
a sensor (330) to detect positions of eyes of a user,
wherein the processor is configured to:
identify a gaze of the user based on the positions of the eyes obtained based on the sensor (330), and
identify an edge facing an edge at which the gaze of the user is located as the reference axis.

11. The electronic device (101) of any one of claim 1 to claim 10,
wherein the processor is configured to:
in response to that the object (410, 1020, 1310, 1320, 1330, 1360) moves more than a reference distance along the vertical direction by the first input (401, 620, 820, 920, 1210), display, on the display (110), the stereoscopic image that enlarges the object (410, 1020, 1310, 1320, 1330, 1360) along the vertical direction.

12. The electronic device (101) of any one of claim 1 to claim 11,
wherein the processor is configured to:
in response to that the object (410, 1020, 1310, 1320, 1330, 1360) moves more than a reference distance along the vertical direction by the first input (401, 620, 820, 920, 1210), display, on the display (110), the stereoscopic image to represent view of the object (410, 1020, 1310, 1320, 1330, 1360) as orthographic view.

13. The electronic device (101) of any one of claim 1 to claim 12, further comprising
a sensor (330) obtaining information for detecting a position of the user,
wherein the processor is configured to:
generate a left eye image and a right eye image for display (110)ing the stereoscopic image,
based on the information, display, on the display (110), the left eye image for the left eye image to reach the user's left eye and be blocked to reach the user's right eye, and
based on the information, display, on the display (110), the right eye image for the right eye image to reach the user's right eye and be blocked to reach the user's left eye.

14. The electronic device (101) of any one of claim 1 to claim 13,
wherein the processor is configured to:
in response to that the object (410, 1020, 1310, 1320, 1330, 1360) moves along the vertical direction by the first input (401, 620, 820, 920, 1210), identify the executable object (421, 425, 431, 435, 441, 445, 461, 455, 631, 635, 831, 835, 931, 935) for an executable function according to a type of the object (410, 1020, 1310, 1320, 1330, 1360), and
display, on the display (110), the identified executable object (421, 425, 431, 435, 441, 445, 461, 455, 631, 635, 831, 835, 931, 935) as the stereoscopic image.

15. The electronic device (101) of any one of claim 1 to claim 14,
wherein the processor is configured to:
identify that the object (410, 1020, 1310, 1320, 1330, 1360) is located within a designated distance from the executable object (421, 425, 431, 435, 441, 445, 461, 455, 631, 635, 831, 835, 931, 935) by the second input which is continued from the first input (401, 620, 820, 920, 1210), and
in response to identifying that the object (410, 1020, 1310, 1320, 1330, 1360) is located within the designated distance from the executable object (421, 425, 431, 435, 441, 445, 461, 455, 631, 635, 831, 835, 931, 935), execute the function.
